# EUROPÄISCHE PATENTSCHRIFT

(11) **EP 3 469 212 B1**
(45) Veröffentlichungstag und Bekanntmachung des Hinweises auf die Patenterteilung: **22.05.2024**
(21) Anmeldenummer: 17731091.9
(22) Anmeldetag: 08.06.2017
(51) Int. Cl.: F03D 1/06, F16B 13/02, F16B 13/04

(54) **ROTOR FÜR EINE WINDENERGIEANLAGE, ROTORBLATT FÜR EINE WINDENERGIEANLAGE, HÜLSE UND VERFAHREN ZUR MONTAGE EINES ROTORS**
ROTOR FOR A WIND TURBINE, ROTOR BLADE FOR A WIND TURBINE, SLEEVE, AND METHOD FOR ASSEMBLING A ROTOR
ROTOR POUR ÉOLIENNE, PALE DE ROTOR POUR ÉOLIENNE, MANCHON ET PROCÉDÉ DE MONTAGE D'UN ROTOR

(30) Priorität: 08.06.2016 DE 102016110551
(43) Veröffentlichungstag der Anmeldung: 17.04.2019
(73) Patentinhaber: Wobben Properties GmbH, 26607 Aurich (DE)
(72) Erfinder: RUBNER, Florian, 26607 Aurich (DE); STOPS, Florian, 39418 Stassfurt OT Neundorf (DE)
(74) Vertreter: Eisenführ Speiser
(86) Internationale Anmeldenummer: PCT/EP2017/063917
(87) Internationale Veröffentlichungsnummer: WO 2017/211929

(56) Entgegenhaltungen:
- EP-A1- 2 592 264
- CN-U- 204 152 734
- DE-A1-102014 206 670
- KR-A- 20130 061 809
- KR-B1- 101 345 716
- US-A1- 2014 356 176

## Beschreibung

Die Erfindung betrifft einen Rotor für eine Windenergieanlage, ein Rotorblatt für eine Windenergieanlage und ein Verfahren zur Montage eines Rotors.

Windenergieanlagen der eingangs genannten Art sind hinlänglich bekannt. Der derzeit gängigste Typ einer Windenergieanlage ist die sogenannte Horizontalachsenwindenergieanlage, die üblicherweise mit drei Rotorblättern ausgestattet ist, wobei auch Windenergieanlagen mit ein, zwei, vier oder mehr Rotorblättern möglich sind. Derartige Windenergieanlagen weisen zunehmend größere Bauformen auf, um einerseits eine höhere Nennleistung erreichen zu können und andererseits eine bessere Ausnutzung des Windes zu ermöglichen.

Größere Bauweisen von Windenergieanlagen können unter anderem höhere Nabenhöhen und/oder Achshöhen und/oder größere Rotordurchmesser aufweisen. Entsprechend können derartige Windenergieanlagen auch größere Generatoren und/oder größere Einspeiseleistungen aufweisen. Insbesondere die größeren Rotordurchmesser resultieren in größeren Kräften und/oder Momenten an der Windenergieanlage. Durch diese größeren Kräfte und/oder Momente werden einerseits die Hauptkomponenten einer Windenergieanlage, beispielsweise die Holmgurte innerhalb eines Rotorblatts, größer bzw. belastbarer dimensioniert, und andererseits werden auch weitere Komponenten, wie beispielsweise Befestigungselemente, größer bzw. belastbarer dimensioniert.

Da Rotorblätter in der Regel von einem Produktionsstandort zu einem Aufstellort der Windenergieanlage transportiert und dort an der Nabe montiert werden müssen, ist häufig die Verwendung geteilter Rotorblätter, insbesondere bei Rotorblättern mit großen Erstreckungen, erforderlich bzw. vorteilhaft. Geteilte Rotorblätter, die also in Längsrichtung wenigstens zwei Teile aufweisen, sind beispielsweise aus der DE 10 2014 206 670 A1 bekannt. Aufgrund der bereits genannten größeren Bauformen von Windenergieanlagen und der damit häufig verbundenen Vergrößerung der einzelnen Rotorblätter erhöhen sich im Allgemeinen auch die Kräfte und/oder Momente innerhalb eines Rotors und/oder Rotorblattes. Daher ist die Verbindung zwischen einem Rotorblatt und einer Rotornabe bzw. zwischen einem ersten Rotorteilblatt und einem zweiten Rotorteilblatt und/oder weiteren Rotorteilblättern vorzugsweise fester zu gestalten, als es bei kleineren Rotorblättern notwendig wäre.

Ein Rotorblatt wird in der Regel mit einer Stirnseite im Bereich der Rotorblattwurzel an einer Rotornabe und/oder einem Blattadapter befestigt. Ferner werden zwei Teilrotorblätter ebenfalls an zwei korrespondierenden Stirnseiten aneinander befestigt. Die DE 197 33 372 C1 oder die DE 103 24 166 A1 offenbaren für eine derartige Befestigung beispielsweise innerhalb des Rotorblattmaterials verlaufende Zugelemente, die meistens als sogenannte Längsbolzen ausgeführt sind. Um derartige Zugelemente in die Rotorblätter einzubringen, ist das Vorsehen von Öffnungen innerhalb des Rotorblatts notwendig. Derartige Öffnungen bilden Kerben im Material, die in der Regel eine Materialschwächung zur Folge haben. Diese Materialschwächung ist insbesondere in einem Faserverbundmaterial, aus dem Rotorblätter in der Regel bestehen bzw. welches die Rotorblätter in der Regel umfassen, besonders relevant, da lasttragende Fasern im Rotorblatt durchtrennt werden können.

Durch die zuvor genannten Dimensionen heutiger Windenergieanlagen müssen diese Zugelemente sowie korrespondierenden Befestigungselemente in der Regel besonders groß dimensioniert werden. Durch diese Dimensionierung der Befestigungselemente erschwert sich einerseits die Handhabung dieser Befestigungselemente und andererseits kann eine nicht sachgemäße Handhabung dieser Befestigungselemente das Material weiter schwächen. Neben dieser weiteren Materialschwächung kann die Bereitstellung derartiger Rotorblätter mit einem besonders hohen Zeitaufwand verbunden sein. Der damit verbundene Personalaufwand resultiert in weiteren Kosten. Darüber hinaus sind häufig weitere Hilfsmaßnahmen vorzunehmen, wie beispielsweise das Ausrichten und/oder Fixieren einzelner Komponenten in dem Befestigungsbereich.

Das Deutsche Patent- und Markenamt hat in der Prioritätsanmeldung zu vorliegender Anmeldung folgenden Stand der Technik recherchiert: DE 197 33 372 C1, DE 103 24 166 A1, DE 10 2006 014 742 A1, DE 10 2014 005 452 A1, DE 10 2014 206 670 A1, WO 2001/042 647 A2.

Die EP 2 592 264 A1 beschreibt einen Blattanschluss für ein Rotorblatt einer Windenergieanlage mit mehreren sich in Längsrichtung des Rotorblatts erstreckenden Aufnahmen. Die CN 204 152 734 U und die KR 2013 0061809 A offenbaren jeweils Rotorblattanschlüsse. Außerdem offenbart die KR 101 345 716 B1 eine Kopplungsvorrichtung für eine Windenergieanlage.

Es ist daher eine Aufgabe der vorliegenden Erfindung einen Rotor für eine Windenergieanlage, ein Rotorblatt für eine Windenergieanlage und ein Verfahren zur Montage eines Rotors bereitzustellen, welche ein oder mehrere der genannten Nachteile vermindern oder beseitigen. Insbesondere ist es eine Aufgabe der Erfindung einen Rotor für eine Windenergieanlage, ein Rotorblatt für eine Windenergieanlage und ein Verfahren zur Montage eines Rotors bereitzustellen, welche eine vereinfachte Montage einer Windenergieanlage ermöglichen. Darüber hinaus ist es eine Aufgabe der vorliegenden Erfindung einen Rotor für eine Windenergieanlage, ein Rotorblatt für eine Windenergieanlage und ein Verfahren zur Montage eines Rotors bereitzustellen, welche zu Kosteneinsparungen und/oder reduzierten Produktionszeiten führen und/oder die Qualität der Windenergieanlagen verbessern.

Gemäß einem ersten Aspekt der vorliegenden Erfindung wird die eingangs genannte Aufgabe gelöst durch einen Rotor für eine Windenergieanlage nach Anspruch 1.

Der Rotor umfasst unter anderem die Rotornabe und mindestens ein Rotorblatt. Die Rotornabe ist das Verbindungselement zwischen dem mindestens einen Rotorblatt und weiteren Anlagenkomponenten. Die Rotornabe umfasst daher eine Anzahl an Rotorblattanschlüssen, wobei die Anzahl der Rotorblattanschlüsse vorzugsweise äquivalent zu der Anzahl der anzuschließenden Rotorblätter ist. Darüber hinaus umfasst die Rotornabe im Allgemeinen einen Anschluss für eine Welle, wobei die Welle die Drehbewegung der Rotornabe auf einen Generator übertragen kann. Ein Rotorblatt erstreckt sich in der Regel von einer Rotorblattwurzel, die im Betriebszustand in einem Bereich angeordnet ist, der der Rotornabe zugewandt ist, zu einer Rotorblattspitze. Insbesondere im Wurzelbereich kann ein Rotorblatt eine Stirnseite aufweisen. Diese Stirnseite weist ferner vorzugsweise orthogonal zur Längserstreckung des Rotorblatts einen kreisrunden Querschnitt auf.

Die sich im Wesentlichen radial zur Längsachse des Rotorblatts erstreckende Querbolzenausnehmung weist eine Mittelachse auf, die im Wesentlichen orthogonal zu der Längsachse des Rotorblatts angeordnet ist. Darüber hinaus ist diese Mittelachse vorzugsweise derart ausgerichtet, dass diese koaxial zu einer Flächenorthogonalen an der Stelle auf der Außenseite des Rotorblatts gerichtet ist, an der die Querbolzenausnehmung angeordnet ist. Der Querbolzen weist eine Querbolzenöffnung auf, die vorzugsweise radial zu seiner Längsachse verläuft. Die Querbolzenausnehmung ist vorzugsweise als Sackloch ausgelegt, so dass die Querbolzenausnehmung keine Durchgangsöffnung darstellt. Vorzugsweise ist der Eintritt der als Sackloch ausgebildeten Querbolzenausnehmung an einer Außenfläche des Rotorblatts angeordnet. Alternativ vorzugsweise ist die Querbolzenausnehmung als Durchgangsöffnung, insbesondere als Durchgangsbohrung, ausgebildet. Orthogonal zu der Mittelachse der Querbolzenausnehmung weist diese vorzugsweise einen kreisrunden Querschnitt auf. Kreisrunde Querschnitte haben den Vorteil, dass diese besonderes einfach eingebracht werden können. Weitere Querschnitte der Querbolzenausnehmung sind jedoch möglich, wobei hier insbesondere eckige und/oder schlitzförmige und/oder ovale Querschnitte möglich sind.

Erfindungsgemäß ist in der Querbolzenausnehmung ein Querbolzen angeordnet. Der Querbolzen weist ebenfalls eine Mittelachse auf, wobei der Querschnitt orthogonal zu dieser Mittelachse vorzugsweise den gleichen Querschnitt in Bezug auf die Form hat wie die Querbolzenausnehmung. Beispielsweise weist der Querbolzen einen kreisrunden Querschnitt auf, wenn die Querbolzenausnehmung ebenfalls einen kreisrunden Querschnitt aufweist. Ferner ist der Querbolzen derart ausgebildet, dass dieser in der Querbolzenausnehmung angeordnet werden kann. Dies betrifft insbesondere Erstreckungen des Querbolzens orthogonal zur Mittelachse, da diese Erstreckungen vorzugsweise kleiner als die Erstreckungen der Querbolzenausnehmung jeweils in gleicher Richtung sein müssen. Bei einer bevorzugten kreisrunden Ausbildung der Querbolzenausnehmung und des Querbolzens ist der Durchmesser des Querbolzens kleiner als der Durchmesser der Querbolzenausnehmung ausgebildet. Bei einer weiteren bevorzugten Ausbildung der Querbolzenausnehmung und des Querbolzens ist der Durchmesser des Querbolzens im Wesentlichen gleich dem Durchmesser der Querbolzenausnehmung ausgebildet.

Der Querbolzen besteht vorzugsweise aus einem metallischen Material, insbesondere einem Stahl, oder umfasst diesen. Insbesondere sind hier hochfeste Materialien, wie beispielsweise hochfeste Stähle oder NE-Metalle, für den Querbolzen bevorzugt. Ferner kann der Querbolzen auch weitere Materialen umfassen oder aus diesen bestehen, wie beispielsweise Kunststoffe oder Keramiken. Ferner weist der Querbolzen eine Querbolzenöffnung auf, die radial zu seiner Mittelachse angeordnet ist. Die Querbolzenöffnung ist entweder als Sackloch oder als Durchgangsöffnung ausgebildet. Vorzugsweise umfasst die Querbolzenöffnung ein Innengewinde.

Die sich im Wesentlichen parallel zur Längsachse des Rotorblatts erstreckende Längsbolzenausnehmung ist somit vorzugsweise im Wesentlichen orthogonal zur Querbolzenausnehmung angeordnet. Die Längsbolzenausnehmung weist ein stirnseitiges Ende und ein stirnseitenabgewandtes Ende auf. Zwischen diesen beiden Enden erstreckt sich die Längsbolzenausnehmung, wobei orthogonal zu dieser Längserstreckung vorzugsweise ein Querschnitt ausgebildet wird, der kreisrund ist. Weitere Querschnitte, wie sie im Vorherigen in Bezug auf die Querbolzenausnehmung ausgeführt wurden, sind auch hier möglich. Die Längsbolzenausnehmung erstreckt sich derart in Längsrichtung des Rotorblatts, dass diese bis zu der stirnseitenzugewandten Wandung der Querbolzenausnehmung reicht. Darüber hinaus sind die Längsbolzenausnehmung und die Querbolzenausnehmung derart angeordnet, dass diese einen gemeinsamen Durchgang aufweisen. Die Längsbolzenausnehmung erstreckt sich somit bis hin zur Querbolzenausnehmung.

Ein in die Längsbolzenausnehmung geführter Längsbolzen kann somit mit einem ersten Abschnitt innerhalb der Längsbolzenausnehmung und mit einem zweiten Abschnitt innerhalb der Querbolzenausnehmung angeordnet sein. Der Längsbolzen besteht ebenfalls vorzugsweise aus einem metallischen Material, vorzugsweise einem Stahl, bzw. umfasst diesen. Insbesondere sind hier hochfeste Materialien, wie beispielsweise hochfeste Stähle oder NE-Metalle, für den Längsbolzen bevorzugt. kann der Längsbolzen auch weitere Materialen umfassen oder aus diesen bestehen, wie beispielsweise Kunststoffe oder Keramiken.

Die Querbolzenöffnung des Querbolzens ist dahingehend vorzugsweise derart ausgebildet, dass der Längsbolzen, vorzugsweise mit dem zweiten Abschnitt, innerhalb der Querbolzenöffnung angeordnet werden kann. Dies betrifft zusätzlich die Position des Querbolzens sowie die Position der Querbolzenöffnung im Querbolzen, da die Querbolzenöffnung vorzugsweise derart angeordnet werden kann, dass diese koaxial zur Längsbolzenausnehmung ausgerichtet ist. Vorzugsweise weisen der Längsbolzen und die Querbolzenöffnung jeweils in Bezug auf ihre jeweilige Mittelachse einen kreisrunden Querschnitt auf. Der Längsbolzen weist in dieser bevorzugten Variante einen geringeren Durchmesser auf als die Querbolzenöffnung, damit der Längsbolzen innerhalb der Querbolzenöffnung angeordnet bzw. durch diese zumindest teilweise hindurchgeführt werden kann. Besonders bevorzugt sind ein Außengewinde in dem zweiten Abschnitt des Längsbolzens sowie ein Innengewinde innerhalb der Querbolzenöffnung, so dass der Längsbolzen in der Querbolzenöffnung mittels einer Schraubverbindung befestigt werden kann. Eine weitere vorteilhafte Ausgestaltung sieht vor, dass der Längsbolzen als ein Gewindebolzen ausgebildet ist. Ein derartiger Gewindebolzen weist entlang seiner Haupterstreckungsrichtung zu einem überwiegenden Teil ein Gewinde auf. Ferner vorzugsweise erstreckt sich das Gewinde im Wesentlichen vollständig von einem ersten Ende bis zu einem zweiten Ende des als Gewindebolzen ausgebildeten Längsbolzens.

Der Erfindung liegt unter anderem die Erkenntnis zugrunde, dass die zuvor genannte Anordnung des Längsbolzens in der Querbolzenöffnung lediglich möglich ist, wenn die Querbolzenöffnung im Wesentlichen koaxial zur Längsbolzenausnehmung und somit koaxial zum Längsbolzen angeordnet ist. Darüber hinaus liegt der Erfindung die Erkenntnis zugrunde, dass die meist großen Abmessungen der Längsbolzen und/oder der Querbolzen zu Beschädigungen am Rotorblatt führen können. Diese Beschädigungen werden beispielsweise durch Flächenpressungen hervorgerufen, die eine zulässige Flächenpressung des die Längsbolzen- und/oder Querbolzenausnehmung umgebenden Materials übersteigt. Ferner können Kerbwirkungen entstehen, die beispielsweise durch ein Kippen und/oder Schwenken des Längsbolzens innerhalb der Längsbolzenausnehmung entstehen, weshalb in der Regel eine exakte Ausrichtung und/oder Zentrierung und/oder Positionierung des Längsbolzens innerhalb der Längsbolzenausnehmung und/oder innerhalb der Querbolzenöffnung erforderlich ist.

Kerbwirkungen und unzulässige Flächenpressungen können zu Materialschädigungen führen, wobei bei Faserverbundmaterialien auch Delaminationen auftreten können. Insbesondere im Wurzelbereich bzw. im Bereich der Stirnflächen an denen das Rotorblatt an einer Rotornabe befestigt wird und hohe Kräfte, beispielsweise die Fliehkräfte des gesamten Rotorblattes, wirken, können Materialschädigungen beispielsweise negative Auswirkungen auf die Integrität, Lebensdauer oder Wartungszyklen des Rotors haben. Ferner kann die Kerbwirkung auch zu einer Schädigung und/oder Ermüdung des Längsbolzens führen, der infolgedessen eine geringere statische und/oder dynamische Festigkeit aufweisen kann. Darüber hinaus kann die Dauerfestigkeit des Längsbolzens reduziert werden. Darüber hinaus kann durch die erfindungsgemäße Lösung der Einsatz zusätzlicher Hilfselemente entfallen, die zum Einsetzen und/oder Justieren der Längsbolzen in der Regel verwendet werden. Insbesondere kann auf den Einsatz eines als Justierplatte ausgebildeten Hilfselements verzichtet werden.

Um diesen Nachteilen zu begegnen ist erfindungsgemäß in der Längsbolzenausnehmung eine Hülse angeordnet, so dass sich der Längsbolzen durch einen Hohlraum der Hülse erstreckt. Durch die Hülse kann ein Kippen und/oder ein Verkanten vermindert oder vermieden werden, so dass die Kerbwirkungen und/oder unzulässigen Flächenpressungen entsprechend vermindert oder vermieden werden können. Ferner besteht die Möglichkeit einer Entkopplung des Längsbolzens von dem Querbolzen.

Die Hülse ist insbesondere derart ausgebildet, dass der Längsbolzen im Wesentlichen koaxial zur Längsbolzenausnehmung geführt wird. Vorzugsweise weist die Hülse daher einen Hohlraum auf, der einen Querschnitt orthogonal zur Längserstreckung der Hülse aufweist, der im Wesentlichen der Form des Querschnitts des Längsbolzens entspricht. Darüber hinaus ist der Innendurchmesser des Hohlraums bzw. die Abmessung innerhalb dieses Hohlraums vorzugsweise kleiner als der Außendurchmesser bzw. die Außenabmessungen des Längsbolzens. Der Außendurchmesser der Hülse ist ferner vorzugsweise kleiner oder gleich dem Durchmesser der Längsbolzenausnehmung.

Die Hülse ist vorzugsweise ein röhrenförmiges Element mit einer rohrförmigen Geometrie. Alternativ vorzugsweise kann die Hülse auch eine kastenförmige Geometrie mit einem rechteckigen oder anderweitigen eckigen Querschnitt aufweisen. Darüber hinaus kann der Hohlraum neben einem kreisrunden Querschnitt ebenfalls einen oder mehrere eckige, vorzugsweise mehreckige Querschnitte aufweisen. Die Hülse ist ferner vorzugsweise an ihren zwei Stirnseiten im Wesentlichen offen, so dass hier ein Eintritt in den und/oder ein Austritt aus dem Hohlraum der Hülse möglich ist. Radial zu ihrer Längserstreckung weist die Hülse beispielsweise eine geschlossene Umwandung auf. Alternativ vorzugsweise ist diese radiale Umwandung nicht vollständig geschlossen, so dass die Umwandung beispielsweise Öffnungen aufweist und/oder die Umwandung als eine Gitterstruktur ausgebildet ist. Die Hülse kann auch aus mehreren Teilen ausgebildet sein, beispielsweise parallel zur Längserstreckung geteilt sein.

In einer nicht beanspruchten Alternative kann die Hülse eine Durchtrittsachse und eine radiale Umwandung mit einer Außenumfangsfläche aufweisen, wobei mindestens ein Steg an der Außenumfangsfläche angeordnet ist und sich mit seiner Haupterstreckungsrichtung im Wesentlichen parallel zu der Durchtrittsachse der Hülse erstreckt. Der mindestens eine Steg kann sich von einem ersten Hülsenende zu einem zweiten Hülsenende erstrecken. Der mindestens eine Steg kann sich auch nur über einen oder mehrere Abschnitte der Längserstreckung der Hülse erstrecken und/oder Unterbrechungen aufweisen. Der mindestens eine Steg weist vorzugsweise eine Höhe in radialer Richtung der Hülse auf und ferner vorzugsweise eine Dicke orthogonal zu der radialen Richtung und orthogonal zu der Haupterstreckungsrichtung, wobei die Dicke vorzugsweise im Wesentlichen parallel zu einer tangentialen Richtung der Außenumfangsfläche ausgerichtet ist.

Eine nicht beanspruchte Alternative der Hülse sieht ferner vor, dass der mindestens eine Steg in einem Abschnitt angrenzend an das erste Hülsenende und/oder an das zweite Hülsenende einen Verjüngungsabschnitt aufweist, wobei die Höhe des mindestens einen Steges im Bereich des Verjüngungsabschnitts reduziert ist. Vorzugsweise sind zwei oder mehr Stege an der Außenumfangsfläche der radialen Umwandung der Hülse angeordnet und erstrecken sich mit ihrer jeweiligen Haupterstreckungsrichtung im Wesentlichen parallel zu der Durchtrittsachse der Hülse. Die Stege sind vorzugsweise äquidistant über die Außenumfangsfläche der Hülse verteilt. Ferner ist es bevorzugt, dass die Hülse eine gerade Anzahl an Stegen aufweist, wobei jeweils zwei diametral zueinander angeordnet sind. Insbesondere ist es bevorzugt, dass sechs Stege an der Außenumfangsfläche angeordnet sind, wobei insbesondere jeweils zwei Stege diametral angeordnet sind.

Die Stege einer derartigen Hülse ermöglichen eine besonders vorteilhafte Passung der Hülse innerhalb der Längsbolzenausnehmung. Insbesondere lässt sich eine Hülse mit einem, zwei oder mehreren Stegen mit geringem Aufwand in der Längsbolzenausnehmung anordnen. Darüber hinaus weist die Hülse durch den Steg bzw. die Stege einen festen Sitz auf.

Das Material der Hülse kann vorzugsweise so gewählt werden, dass dieses elastische Eigenschaften aufweist. Insbesondere ist es bevorzugt, dass das Material der Hülse elastischer ist als das Material des Längsbolzens und/oder das die Längsbolzenausnehmung umgebende Material. Ein elastisches Material der Hülse kann dahingehend vorteilhaft genutzt werden, dass die Hülse mit einer gewissen Kraft in die Längsbolzenausnehmung eingeführt wird, und durch das elastische Verhalten an einer Stelle fixiert ist. Ein anschließendes Einführen des Längsbolzens unter anderem durch den Hohlraum der Hülse könnte somit zu keiner oder einer verminderten Verschiebung der Hülse innerhalb der Längsbolzenausnehmung führen. Ferner vorzugsweise kann die Hülse am Längsbolzen angeordnet werden, so dass der Längsbolzen mit der Hülse anschließend unter anderem in der Längsbolzenöffnung angeordnet werden kann.

Die Hülse kann aus einem Kunststoff, und/oder einem Metall, und/oder einem NE-Metall, und/oder einem Holz, und/oder einer Keramik und/oder einem Glas bestehen bzw. dieses oder diese umfassen. Insbesondere ist es bevorzugt, dass die Hülse aus einem Schaum besteht oder diesen umfasst. Als Schaum kann beispielsweise Polyvinylchlorid (PVC), Polyurethan oder Polyethylenterephthalat (PET) eingesetzt werden. Darüber hinaus kann die Hülse an einer Außenumfangsfläche Positionierungselemente wie beispielsweise Haken aufweisen. Diese Positionierungselemente können unter anderem die Positionierung der Hülse innerhalb der Längsbolzenausnehmung verbessern.

In einer bevorzugten Ausführungsvariante des Rotors ist vorgesehen, dass der Längsbolzen mit mindestens einem Nabenbefestigungsabschnitt stirnseitig aus dem Rotorblatt herausragt und mit einem, vorzugsweise T-förmigen und/oder L-förmigen, umlaufenden, Rotornabenflansch verbunden ist, der seinerseits, vorzugsweise einstückig, an der Rotornabe angeordnet ist. Der Längsbolzen ist insbesondere mit seinem stirnseitenabgewandten Ende dem Querbolzen verbunden oder anderweitig in einem Bereich angrenzend an den Querbolzen befestigt. In einem Bereich angrenzend an das stirnseitenzugewandte Ende des Längsbolzens ist der Nabenbefestigungsabschnitt angeordnet. Der Nabenbefestigungsabschnitt des Längsbolzens, der in dieser Ausführungsvariante stirnseitig aus dem Rotorblatt herausragt, ist ferner mit dem Rotornabenflansch verbunden.

Somit kann eine Befestigung des Rotorblatts mit einer Rotornabe gewährleistet werden. Für eine derartige Verbindung kann in einer weiteren Ausführungsvariante vorzugsweise vorgesehen werden, dass der Nabenbefestigungsabschnitt ein Außengewinde und der Rotornabenflansch eine zum Längsbolzen koaxial anzuordnende Durchgangsöffnung aufweist, wobei der Längsbolzen durch diese Durchgangsöffnung hindurchführbar ist und auf einer rotorblattabgewandten Seite des Rotornabenflansch der Nabenbefestigungsabschnitt mit einem Befestigungselement mit einem Innengewinde, vorzugsweise einer Mutter, fixiert ist. Hier ist die Verbindung zwischen dem Rotornabenflansch und dem Rotorblatt vorzugsweise mit einer Schraubverbindung gelöst.

In einer besonders bevorzugten Ausführungsvariante des Rotors ist vorgesehen, dass das mindestens eine Rotorblatt mehrere Längsbolzenausnehmungen und/oder mehrere Querbolzenausnehmungen und/oder mehrere Längsbolzen und/oder mehrere Querbolzen mit jeweils mindestens einer Querbolzenöffnung und/oder mehrere Hülsen umfasst, die jeweils gemäß einer der im Vorherigen beschriebenen Ausführungsvarianten angeordnet sind. Die Längsbolzenausnehmungen weisen vorzugsweise die gleiche Beabstandung von der Längsachse des Rotorblatts auf und/oder sind ferner vorzugsweise äquidistant auf dem Umfang der Stirnfläche verteilt.

Vorzugsweise sind die Längsbolzenausnehmungen paarweise parallel zueinander und in zwei im Wesentlichen zueinander konzentrisch angeordneten Reihen angeordnet. Alternativ vorzugsweise sind die Längsbolzenausnehmungen der einen Reihe relativ zu den Längsbolzenausnehmungen der anderen Reihe angeordnet. Bei dem bevorzugten Vorsehen von lediglich einer Reihe an Längsbolzenausnehmungen entlang der Stirnseite des Rotorblatts, ist die Anzahl der Querbolzenausnehmungen vorzugsweise gleich der Anzahl der Längsbolzenausnehmungen. Bei dem Vorsehen einer zweiten Reihe von Längsbolzenausnehmungen kann die Anzahl derQuerbolzenausnehmungen die Hälfte der Anzahl der Längsbolzenausnehmungen sein, da ein Querbolzen in eine Querbolzenausnehmung angeordnet werden und insgesamt zwei Querbolzenöffnungen aufweist kann, so dass zwei Längsbolzen, die jeweils in zwei Längsbolzenausnehmungen angeordnet sind wiederrum in einem einzigen Querbolzen mit insgesamt zwei Querbolzenöffnungen angeordnet werden kann.

Gemäß einer weiteren besonders bevorzugten Ausführungsvariante des Rotors ist vorgesehen, dass die Hülse aus einem Kunststoff besteht oder einen Kunststoff umfasst, Insbesondere ist hier ein thermoplastischer Kunststoff bevorzugt. Darüber hinaus kann die Hülse aus einem Elastomer bestehen bzw. diesen umfassen. Elastomere, umgangssprachlich auch als Gummi bezeichnet, weisen in der Regel starke elastische Eigenschaften auf. In einer weiteren Ausführungsvariante kann die Hülse einen faserverstärkten Kunststoff umfassen oder aus diesem bestehen, der beispielsweise Kurzfasern umfasst. Eine weitere vorteilhafte Ausführungsform sieht vor, dass die Hülse aus einem metallischen Material, insbesondere einem ungehärteten metallischen Material, besteht oder dieses umfasst. Vorzugsweise besteht die Hülse aus Aluminium oder aus einer Aluminiumlegierung oder die Hülse umfasst Aluminium oder eine Aluminiumlegierung.

Erfindungsgemäß ist vorgesehen, dass sich die Hülse von einem ersten Hülsenende bis zu einem zweiten Hülsenende erstreckt, umfassend einen ersten Hülsenabschnitt, angrenzend an das erste Hülsenende, mit einem ersten Außendurchmesser und einen zweiten Hülsenabschnitt, angrenzend an das zweite Hülsenende, mit einem zweiten Außendurchmesser.

Erfindungsgemäß unterscheidet sich der erste Außendurchmesser von dem zweiten Außendurchmesser durch seine Abmessung. Der Sprung von dem ersten Außendurchmesser zu dem zweiten Außendurchmesser kann beispielsweise durch einen geraden Absatz realisiert werden, wobei die entstehende Stufe eine Fläche ausbildet, die eine Flächenorthogonale parallel zur Längserstreckung der Hülse aufweist. Alternativ kann dieser Absatz bzw. der Übergang vom ersten zum zweiten Außendurchmesser nicht sprunghaft sondern stetig, beispielsweise mit einem Radius, erfolgen. Ein solcher stetiger Übergang kann beispielsweise eine Gerade und/oder eine Kurve sein bzw. umfassen.

In weiteren Ausführungsvarianten der Hülse kann diese auch drei oder mehr Abschnitte mit unterschiedlichen und/oder gleichen Außendurchmessern aufweisen. Eine Hülse mit verschiedenen Außendurchmessern bietet verschiedene Vorteile. Beispielsweise besteht die Möglichkeit den Hülsenbereich mit einem geringeren Durchmesser innerhalb der Querbolzenöffnung anzuordnen. Der Hülsenabschnitt mit dem größeren Außendurchmesser ist dann beispielsweise in der Längsbolzenausnehmung angeordnet.

Durch eine derartige Anordnung der Hülse bzw. der einzelnen Hülsenabschnitte mit unterschiedlichen Außendurchmessern, kann eine Fixierung der Hülse in der Längsbolzenausnehmung erfolgen. Je nachdem wie weit der Hülsenabschnitt mit dem geringeren Außendurchmesser in die Querbolzenöffnung eingeführt wird, kann der Längsbolzen entweder weiterhin in den Querbolzen bzw. in einen Teil der Querbolzenöffnung hineingeschraubt werden oder der Längsbolzen kann vollständig durch die Querbolzenöffnung hindurchführen und an einem daran angeschlossenen Element befestigt werden. Darüber hinaus können die unterschiedlichen Außendurchmesser der Hülse genutzt werden, um die Hülse verbessert in der Längsbolzenausnehmung anzuordnen. Darüber hinaus kann das Anordnen des Längsbolzens innerhalb des Hohlraums der Hülse durch unterschiedliche Außendurchmesser verbessert werden.

Gemäß einer weiteren besonders bevorzugten Ausführungsvariante des Rotors ist vorgesehen, dass in dem Hohlraum der Hülse mindestens ein Innengewinde angeordnet ist, wobei das Innengewinde vorzugsweise in einem Abschnitt angeordnet ist, der an das erste Hülsenende und/oder an das zweite Hülsenende angrenzt. Das Innengewinde kann sich beispielsweise vollständig von dem ersten bis zu dem zweiten Hülsenende erstrecken. Andererseits besteht auch die Möglichkeit, dass das Innengewinde lediglich abschnittsweise innerhalb des Hohlraums der Hülse angeordnet ist. Insbesondere ist es bevorzugt, dass das Innengewinde in Bereichen angeordnet ist, die an das erste und/oder zweite Hülsenende angrenzen.

Besonders bevorzugt ist es, dass an dem ersten und/oder zweiten Ende ein Innengewinde angeordnet ist, das in Längsrichtung eine Erstreckung aufweist, die weniger als 20% der gesamten Längserstreckung der Hülse aufweist. Ferner besteht die Möglichkeit, dass diese Erstreckung weniger als 15%, vorzugsweise weniger als 10%, insbesondere weniger als 5%, der Längserstreckung der Hülse entspricht. Neben weiteren Vorteilen eines Innengewindes innerhalb eines Hohlraumes der Hülse besteht insbesondere die Möglichkeit, dass die Hülse an dem Längsbolzen fixiert wird, vorzugsweise bereits vor dem Anordnen des Längsbolzens in der Längsbolzenausnehmung, so dass die Hülse am Längsbolzen keine oder zumindest verminderte Längsverschiebung mehr erfahren kann. Somit kann vermieden werden, dass die Hülse eine unvorteilhafte Position einnimmt. Insbesondere kann gegebenenfalls vermieden werden, dass die Hülse stirnseitig aus dem Rotorblatt hervorsteht.

Gemäß einer weiteren bevorzugten Ausführungsvariante des Rotors ist vorgesehen, dass die Hülse an die Stirnseite des Rotorblatts und/oder an einem stirnseitenzugewandten Ende der Längsbolzenausnehmung oder einem stirnseitenabgewandten Ende der Längsbolzenausnehmung angrenzt.

Vorzugsweise ist der Längsbolzen innerhalb der Längsbolzenausnehmung in radialer Richtung im Wesentlichen vollständig von der Hülse umgeben. Dies bezieht sich insbesondere darauf, dass zwischen dem Längsbolzen und einer Wandung der Längsbolzenausnehmung die Hülse angeordnet ist. Dies gilt auch für Hülsen, die keine geschlossene Umwandung aufweisen, sondern beispielsweise Öffnungen und/oder Löcher oder anderweitige Strukturen, beispielsweise Gitternetze, aufweisen, so dass die Hülse den Längsbolzen in radialer Richtung bzw. umlaufend nicht vollständig umgibt. Bei Hülsen mit einer solchen nicht geschlossenen Umwandung bezieht sich die vollständige Umgebung des Längsbolzens also auf eine Hüllfläche bzw. Mantelfläche der Hülse.

In einer weiteren Ausführungsvariante des Rotors ist vorgesehen, dass die Hülse eine Beabstandung von der Stirnseite des Rotorblatts und/oder einem stirnseitenzugewandten Ende der Längsbolzenausnehmung oder einem stirnseitenabgewandten Ende der Längsbolzenausnehmung aufweist und diese Beabstandung 0 bis 25% einer Erstreckung der Längsbolzenausnehmung und/oder einer Gesamterstreckung von Längsbolzenausnehmung und Querbolzenöffnung ist. Die Erstreckung der Längsbolzenausnehmung ist im Wesentlichen identisch mit bzw. parallel zu der Längsachse des Rotorblatts. Besonders bevorzugt ist es, dass die Beabstandung von dem stirnseitenzugewandten oder von dem stirnseitenabgewandten Ende der Längsbolzenausnehmung kleiner als 20% der Erstreckung der Längsbolzenausnehmung ist, vorzugsweise kleiner als 15% der Erstreckung der Längsbolzenausnehmung ist, insbesondere kleiner als 10% der Erstreckung der Längsbolzenausnehmung ist, beispielsweise kleiner als 5% der Erstreckung der Längsbolzenausnehmung ist.

In einer weiteren Ausführungsvariante des Rotors ist vorgesehen, dass die Hülse eine Beabstandung von der Stirnseite des Rotorblatts und/oder einem stirnseitenzugewandten Ende der Längsbolzenausnehmung und/oder einem stirnseitenabgewandten Ende der Längsbolzenausnehmung aufweist und diese Beabstandung größer als 25% einer Erstreckung der Längsbolzenausnehmung und/oder einer Gesamterstreckung von Längsbolzenausnehmung und Querbolzenöffnung ist.

Gemäß einer weiteren bevorzugten Ausführungsvariante des Rotors ist vorgesehen, dass die Hülse an der Stirnseite des Rotorblatts und/oder an einem stirnseitenzugewandten Ende der Längsbolzenausnehmung oder einem stirnseitenabgewandten Ende der Längsbolzenausnehmung angrenzt. In dieser Ausführungsvariante ist vorzugsweise keine wesentliche Beabstandung der Hülse von dem stirnseitenzugewandten Ende der Längsbolzenausnehmung und/oder von dem stirnseitenabgewandten Ende der Längsbolzenausnehmung vorgesehen.

Gemäß einer weiteren bevorzugten Ausführungsvariante des Rotors ist vorgesehen, dass die Hülse in Längsrichtung mindestens zweigeteilt ist. Die Teilungsebene erstreckt sich vorzugsweise vom ersten Hülsenende zum zweiten Hülsenende. Vorzugsweise umfasst die Hülse bei einer Zweiteilung somit zwei Hälften eines Rohres, die jeweils ein 180 Grad Teilrohrsegment ausmachen. Wenn die Hülse in der Längsbolzenausnehmung angeordnet ist, die Längsrichtung der Hülse im Wesentlichen identisch mit oder parallel zu der Längsachse des Rotorblatts.

Eine derartige Hülse kann besonders kostengünstig hergestellt werden, da beispielsweise im Spritzgießverfahren keine Kerne vorgesehen werden müssen. Die Verbindung dieser zwei Hülsenteile kann beispielsweise mit mindestens einem O-Ring erfolgen.

Gemäß einer nicht beanspruchten Alternative des Rotors ist vorgesehen, dass die mindestens eine Rippe aufweist, die vorzugsweise in dem Hohlraum und/oder an einer Innenumfangsfläche und/oder radial umlaufend angeordnet ist. Eine derartige Rippe oder zwei oder mehrere derartiger Rippen im Hohlraum einer Hülse können die Festigkeit der Hülse durch einen Versteifungseffekt erhöhen. Die Hülse ist in einer bevorzugten Ausführungsvariante biegeweich ausgebildet. Ferner können die in dem Hohlraum der Hülse angeordneten Rippen zur Fixierung der Hülse an einem Längsbolzen genutzt werden. Bei einer nicht beanspruchten Alternative der Hülse mit drei oder mehreren Rippen innerhalb des Hohlraums der Hülse ist ferner bevorzugt, dass die Rippen äquidistant voneinander beabstandet sind. In einer weiteren nicht beanspruchten Alternative umfasst die Hülse, entweder ausschließlich oder ergänzend zu den Rippen im Hohlraum der Hülse,

Rippen auf einer Außenumfangsfläche, die zusätzlich zum Versteifungseffekt eine Fixierung der Hülse, insbesondere innerhalb der Längsbolzenausnehmung, ermöglicht.

Erfindungsgemäß ist vorgesehen, dass ein Abschnitt der Hülse in der Querbolzenöffnung angeordnet ist, wobei dieser Abschnitt vorzugsweise einen größeren oder kleineren Außendurchmesser aufweist als andere Abschnitte der Hülse. In dieser Ausführungsvariante kann die Hülse vorzugsweise in der Längsbolzenausnehmung angeordnet werden, so dass ein Bereich der Hülse bis in die Querbolzenöffnung hineinreicht. Wenn die Querbolzenöffnung einen Durchmesser aufweist, der geringer ist als ein Außendurchmesser eines Hülsenabschnitts, der nicht in der Querbolzenöffnung angeordnet ist, besteht hier ferner die Möglichkeit den Absatz, der vom kleineren zum größeren Durchmesser entsteht, als Anschlag zu nutzen. Somit besteht die Möglichkeit über diesen Anschlag die Position der Hülse in der Längsbolzenausnehmung bzw. in der Querbolzenöffnung festzulegen und/oder die Hülse, beispielsweise durch eine Presspassung, zu fixieren.

Gemäß einer weiteren bevorzugten Ausführungsvariante des Rotors, umfasst der Rotor eine auf der stirnseitenabgewandten Seite des Querbolzens angeordnete, sich im Wesentlichen parallel zur Längsachse des Rotorblatts und koaxial zur Längsbolzenausnehmung erstreckende Dehnhülsenausnehmung, in der eine Dehnhülse angeordnet ist.

Erfindungsgemäß ist der erste und/oder zweite Hülsenabschnitt innerhalb der Querbolzenöffnung angeordnet. Dieser Abschnitt weist vorzugsweise einen größeren oder kleineren Außendurchmesser auf als andere Hülsenabschnitte.

Der Längsbolzen kann sich somit durch die Querbolzenöffnung hindurch erstrecken und trifft auf der stirnseitenabgewandten Seite des Querbolzens auf die Dehnhülse. Die Dehnhülse ist vorzugsweise angeordnet und ausgebildet, dass in dieser der Längsbolzen befestigt werden kann. In dieser Ausführungsvariante ist es besonders bevorzugt eine zuvor beschriebene Hülse mit einem ersten und einem zweiten Außendurchmesser anzuordnen, wobei der erste und der zweite Außendurchmesser verschiedene Abmessungen aufweisen. Der Abschnitt mit dem kleineren Außendurchmesser kann hier in die Querbolzenöffnung eingeführt werden, so dass der Querbolzen fixiert ist. Ein Längsbolzen kann nun durch die Hülse und somit auch durch die Längsbolzenöffnung hindurchgeführt werden, um bis zur Dehnhülse zu gelangen, wo dieser befestigt werden kann.

Gemäß einer weiteren Ausführungsvariante ist vorgesehen, dass die Querbolzenausnehmung als Sackloch und/oder als Durchgangsöffnung ausgeführt ist.

Gemäß einem weiteren Aspekt der Erfindung wird die eingangs genannte Aufgabe gelöst durch ein Rotorblatt für eine Windenergieanlage nach Anspruch 8.

Hier wird die im ersten Aspekt der Erfindung bereits beschriebene Verbindung eines Rotorblatts mit einer Rotornabe verwendet, um ein Rotorblattinnenteil und ein Rotorblattaußenteil miteinander zu verbinden. Da die Verbindung eines Rotorblattinnenteils mit einem Rotorblattaußenteil vorzugsweise ebenfalls mit einem Längsbolzen und einem Querbolzen mit entsprechenden Ausnehmungen erfolgt, ist eine Hülse in der Längsbolzenausnehmung auch hier vorgesehen, so dass die bereits oben beschriebenen Ausführungsvarianten und Vorteile auch hier genutzt werden können.

In einer weiteren bevorzugten Ausführungsvariante des Rotorblatts ist vorgesehen, dass der Längsbolzen mit mindestens einem Befestigungsabschnitt stirnseitig aus dem Rotorblattaußenteil herausragt und mit einem, vorzugsweise T-förmigen und/oder L-förmigen, umlaufenden Rotorblattinnenteilflansch verbunden ist, der seinerseits, vorzugsweise einstückig, an dem Rotorblattinnenteil angeordnet ist. Der Rotorblattinnenteilflansch kann vorzugsweise aus Stahl ausgebildet sein oder Stahl aufweisen. In einer weiteren bevorzugten Ausführungsvariante des Rotorblatts ist vorgesehen, dass der Längsbolzen mit mindestens einem Befestigungsabschnitt stirnseitig aus dem Rotorblattinnenteil herausragt, und mit einem, vorzugsweisen T-förmigen, umlaufenden, Rotorblattaußenteilflansch verbunden ist, der seinerseits, vorzugsweise einstückig, an dem Rotorblattaußenteil angeordnet ist.

Gemäß einer weiteren Ausführungsvariante des Rotorblatts ist vorgesehen, dass der Befestigungsabschnitt ein Außengewinde umfasst und der Rotorblattinnenteilflansch eine zum Längsbolzen koaxial anzuordnende Durchgangsöffnung aufweist, wobei der Längsbolzen durch diese Durchgangsöffnung hindurchführbar ist und auf einer Rotorblattaußenteil abgewandten Seite des Rotorblattinnenteilflansches der Befestigungsabschnitt mit einem Befestigungselement mit einem Innengewinde, vorzugsweise einer Mutter, fixiert ist. Gemäß einer weiteren Ausführungsvariante des Rotorblatts ist vorgesehen, dass der Befestigungsabschnitt ein Außengewinde umfasst und der Rotorblattaußenteilflansch eine zum Längsbolzen koaxial anzuordnende Durchgangsöffnung aufweist, wobei der Längsbolzen durch die Durchgangsöffnung hindurchführbar ist und auf einer Rotorblattinnenteil abgewandten Seite des Rotorblattaußenteilflansches der Befestigungsabschnitt mit einem Befestigungselement mit einem Innengewinde, vorzugsweise einer Mutter, fixiert ist.

Gemäß einem weiteren Aspekt der Erfindung wird die eingangs genannte Aufgabe gelöst durch einen Rotor gemäß mindestens einer der im Vorherigen genannten Ausführungsvarianten umfassend ein Rotorblatt gemäß mindestens einer der zuvor genannten Ausführungsvarianten nach Anspruch 9. Der Rotor umfasst somit eine Verbindung des Rotorblatts mit der Rotornabe wie im Vorherigen genannt sowie ein Rotorblatt, das ein Rotorblattinnenteil und ein Rotorblattaußenteil umfasst, welche vorzugsweise gemäß dem vorherigen Aspekt ausgebildet sind.

Ferner wird beschrieben eine Hülse zur Ausrichtung eines Längsbolzens und/oder eines Querbolzens innerhalb einer Längsbolzenausnehmung und/oder einer Querbolzenausnehmung eines Rotors gemäß einer der im Vorherigen beschriebenen Ausführungsvarianten und/oder eines Rotorblatts gemäß mindestens einer der im Vorherigen beschriebenen Ausführungsvarianten.

Gemäß einem weiteren Aspekt der vorliegenden Erfindung wird die eingangs genannte Aufgabe gelöst durch eine Windenergieanlage nach Anspruch 10 umfassend mindestens einen Rotor gemäß mindestens einer der im Vorherigen beschriebenen Ausführungsvarianten und/oder mindestens ein Rotorblatt gemäß mindestens einer der im Vorherigen beschriebenen Ausführungsvarianten.

Gemäß einem weiteren Aspekt der vorliegenden Erfindung wird die eingangs genannte Aufgabe gelöst durch ein Verfahren zur Montage eines Rotors gemäß mindestens einer der im Vorherigen beschriebenen Ausführungsvarianten und/oder eines Rotorblatts gemäß mindestens einer der im Vorherigen beschriebenen Ausführungsvarianten nach Anspruch 11. Vorzugsweise werden hierfür die Elemente eines Rotors gemäß mindestens einer der im Vorherigen beschriebenen Ausführungsvarianten und/oder eines Rotorblatts gemäß mindestens einer der im Vorherigen beschriebenen Ausführungsvarianten für die Montage bereitgestellt.

Die Hülse kann zunächst separat in die Längsbolzenausnehmung eingebracht werden und daraufhin im Anschluss ein Längsbolzen in die Längsbolzenausnehmung angeordnet werden, insbesondere derart dass der Längsbolzen durch den Hohlraum der Hülse hindurch angeordnet ist.

Darüber hinaus besteht die Möglichkeit, dass der Längsbolzen zunächst mit einem Abschnitt in dem Hohlraum der Hülse und im Anschluss daran die Baugruppe aus Längsbolzen und Hülse in der Längsbolzenausnehmung angeordnet wird. Die Anordnung des Längsbolzens innerhalb der Querbolzenöffnung erfolgt vorzugsweise dahingehend, dass der Längsbolzen innerhalb der Querbolzenöffnung befestigt wird. Dies kann beispielsweise durch ein Innengewinde in der Querbolzenöffnung und einem am entsprechenden Abschnitt des Längsbolzens korrespondierendem Außengewinde. Ferner besteht die Möglichkeit, dass der Längsbolzen durch die Querbolzenöffnung hindurchragt und bei Austritt aus der Querbolzenöffnung wiederrum an einem weiteren Element, beispielsweise einer Dehnhülse, befestigt wird.

In einer weiteren bevorzugten Ausführungsvariante des Verfahrens ist vorgesehen, dass der Nabenbefestigungsabschnitt des Längsbolzens ein Außengewinde umfasst und der Rotornabenflansch eine zum Längsbolzen koaxial anzuordnende Durchgangsöffnung aufweist, wobei der Längsbolzen durch diese Durchgangsöffnung hindurchgeführt wird und auf einer rotorblattabgewandten Seite des Flansches der Nabenbefestigungsabschnitt mit einem Befestigungselement mit einem Innengewinde, vorzugsweise einer Mutter, fixiert wird. Hier findet die Verbindung des Rotorblattes mit der Rotornabe also durch eine Schraubverbindung statt, welche insbesondere durch die stirnseitige Befestigung des Rotorblatts an einem nabenseitigen Flansch realisiert wird.

Gemäß einer weiteren Ausführungsvariante des Verfahrens umfasst dieses den Schritt Befestigen des Längsbolzens innerhalb der Querbolzenöffnung, wobei die Befestigung vorzugsweise durch eine Schraubverbindung erfolgt, so dass vorzugsweise die Querbolzenöffnung ein Innengewinde und der Längsbolzen vorzugsweise ein Außengewinde aufweist. Der Längsbolzen ist somit am Rotorblatt in Längsrichtung des Rotorblattes fixiert.

Gemäß einer weiteren Ausführungsvariante des Verfahrens umfasst dieses die Schritte Anordnen einer Dehnhülse innerhalb einer Dehnhülsenausnehmung, wobei die Dehnhülsenausnehmung auf einer stirnseitenabgewandten Seite der Querbolzenöffnung angeordnet ist, Hindurchführen eines Längsbolzens durch die Querbolzenöffnung, und verbinden des Längsbolzens mit der Dehnhülse. Hier dient der Querbolzen nicht primär der Befestigung des Längsbolzens, sondern lediglich dem Hindurchführen des Längsbolzens zu der Dehnhülse. Die Dehnhülse ist vorzugsweise ein rohrförmiges Element, wobei dieses besonders bevorzugt ein Innengewinde aufweist, das korrespondierend zu einem Außengewinde des Längsbolzens an dessen stirnseitenabgewandten Ende ausgebildet ist.

Das erfindungsgemäße Verfahren und seine möglichen Fortbildungen weisen Merkmale bzw. Verfahrensschritte auf, die sie insbesondere dafür geeignet machen, für einen erfindungsgemäßen Rotor und/oder ein erfindungsgemäßes Rotorblatt sowie ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Rotors verwiesen.

Bevorzugte Ausführungsformen der Erfindung werden beispielhaft anhand der beiliegenden Figuren erläutert. Es zeigen:
- Fig. 1:: eine schematische Ansicht einer beispielhaften Ausführungsform einer Windenergieanlage;
- Fig. 2:: eine schematische Ansicht einer beispielhaften Ausführungsform eines im Stand der Technik bekannten Blattanschlusses;
- Fig. 3:: eine dreidimensionale Ansicht einer nicht erfindungsgemäßen Hülse;
- Fig. 4:: eine Ansicht in Längsrichtung der nicht erfindungsgemäßen Hülse gemäß Figur 3;
- Fig. 5:: eine geschnittene Seitenansicht der nicht erfindungsgemäßen Hülse gemäß Figur 3;
- Fig. 6:: eine geschnittene Seitenansicht einer weiteren nicht erfindungsgemäßen Hülse;
- Fig. 7:: eine schematische, dreidimensionale Ansicht einer beispielhaften Ausführungsform einer Hülse;
- Fig. 8:: eine Ansicht in Längsrichtung der Hülse gemäß Figur 7;
- Fig. 9:: eine geschnittene Teilseitenansicht der Hülse gemäß Figur 7;
- Fig. 10:: eine schematische Seitenansicht einer weiteren beispielhaften Ausführungsform einer Hülse;
- Fig. 11:: eine schematische, dreidimensionale Ansicht der Hülse gemäß Figur 10;
- Fig. 12:: eine schematische Detailansicht der Hülse gemäß Figur 10;
- Fig. 13:: eine schematische, geschnittene Seitenansicht einer beispielhaften Ausführungsform eines Verbindungsbereiches eines zweigeteilten Rotorblattes;
- Fig. 14:: eine schematische, geschnittene Seitenansicht einer weiteren beispielhaften Ausführungsform eines Verbindungsbereiches eines zweigeteilten Rotorblattes;
- Fig. 15:: eine schematische, dreidimensionale Ansicht einer nicht erfindungsgemäßen Hülsenhälfte;
- Fig. 16:: eine schematische Seitenansicht der nicht erfindungsgemäßen Hülsenhälfte gemäß Figur 15;
- Fig. 17:: eine weitere schematische Seitenansicht der nicht erfindungsgemäßen Hülsenhälfte gemäß Figur 15;
- Fig. 18:: eine schematische, zweidimensionale Seitenansicht einer nicht erfindungsgemäßen Hülse;
- Fig. 19:: eine schematische, dreidimensionale Ansicht der in Figur 18 gezeigten nicht erfindungsgemäßen Hülse;
- Fig. 20:: eine schematische, zweidimensionale Vorderansicht der in Figur 18 gezeigten nicht erfindungsgemäßen Hülse.

In den Figuren sind gleiche oder im Wesentlichen funktionsgleiche bzw. ähnliche Elemente mit den gleichen Bezugszeichen bezeichnet.

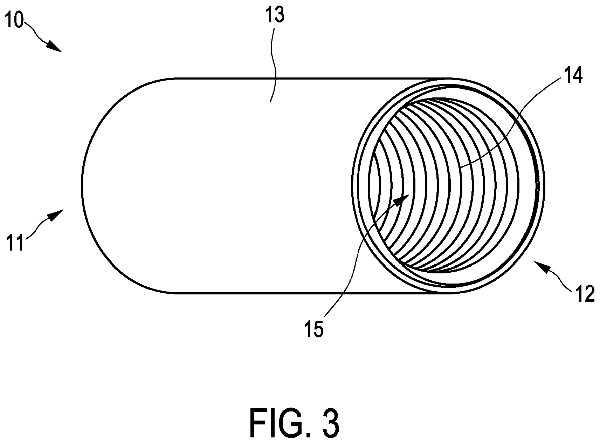

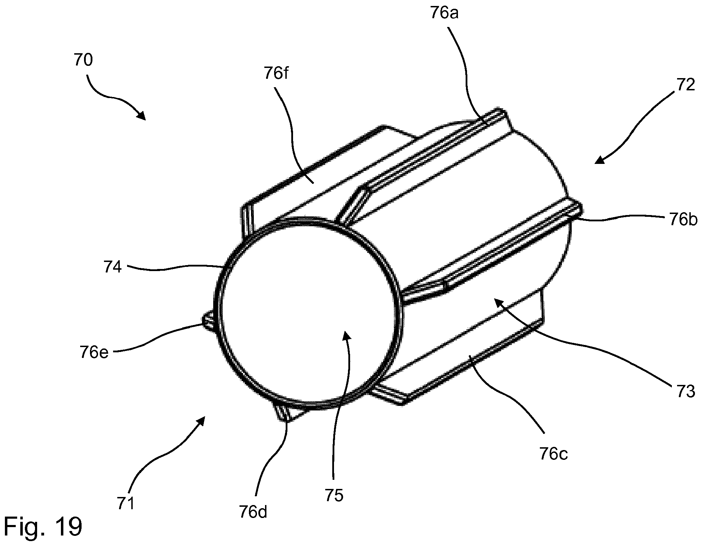

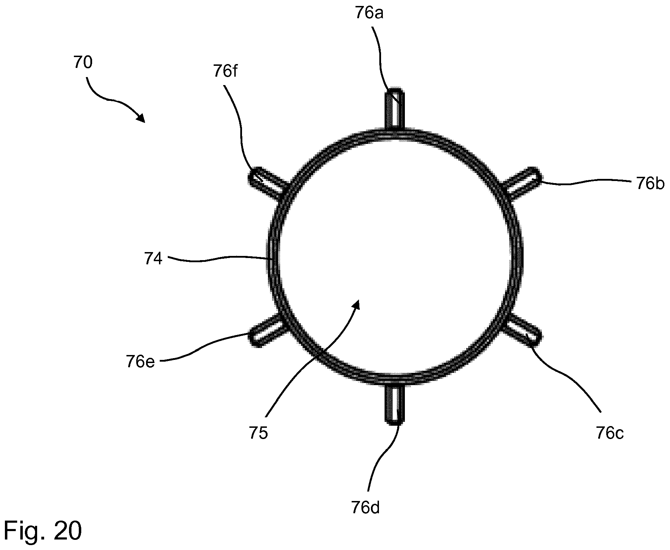

Die in den Figuren 3-6 und 15-20 dargestellten Hülsen weisen nicht die erfindungsgemäß vorgesehenen ersten und zweiten Hülsenabschnitte auf, deren Außendurchmesser sich durch ihre Abmessungen unterscheiden, und dienen daher lediglich der Veranschaulichung.

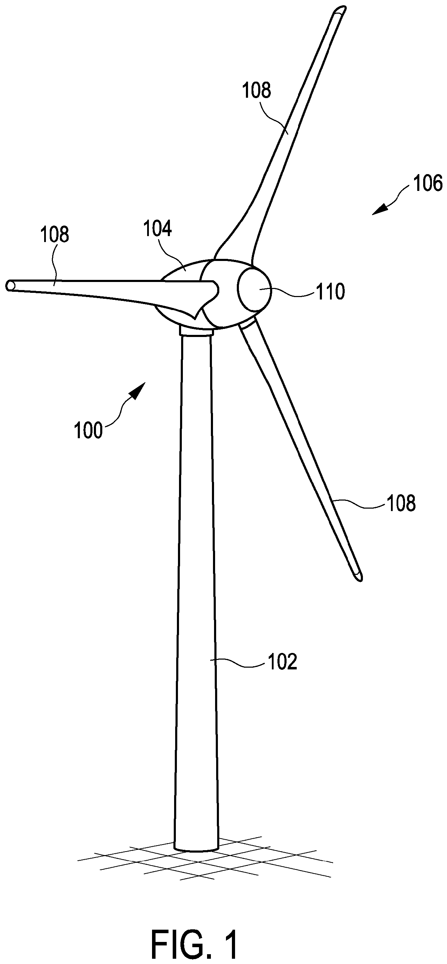

Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

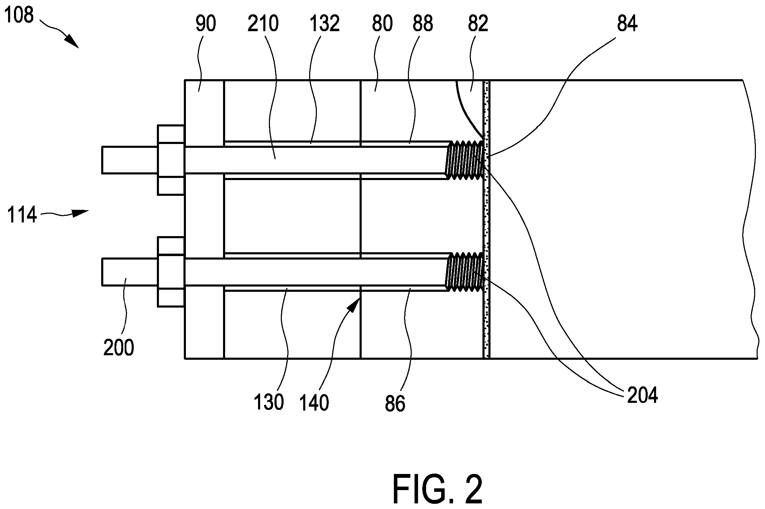

Figur 2 zeigt eine schematische Ansicht einer beispielhaften Ausführungsform eines im Stand der Technik bekannten Blattanschlusses. Das Blatt 108 erstreckt sich in Längsrichtung von einem proximalen Blattende 114 zu einem distalen Ende (hier nicht gezeigt), wobei eine Blattspitze das distale Ende umfasst. Das Blatt 108 ist in einer geschnittenen Ansicht dargestellt, so dass hier eine innere Ansicht der das Blatt ausbildenden Wandung orthogonal zur Längserstreckung des Blattes 108 gezeigt ist. Von dem proximalen Blattende 114 erstrecken sich im Wesentlichen in Längsrichtung des Blattes ausgerichtet eine erste Längsbolzenausnehmung 130 und eine zweite Längsbolzenausnehmung 132. Orthogonal zu den Längsbolzenausnehmungen 130, 132 ist radial zur Längsachse des Blattes eine Querbolzenausnehmung 140 angeordnet. Die Längsbolzenausnehmungen 130, 132 und die Querbolzenausnehmung 140 sind insbesondere derart angeordnet, dass die Enden der Längsbolzenausnehmungen 130, 132, die dem proximalen Blattende 114 abgewandt sind, an der Querbolzenausnehmung 140 angeordnet sind, so dass die jeweils eine Längsbolzenausnehmung 130, 132 und die Querbolzenausnehmung 140 einen gemeinsamen Durchgang aufweisen, der vorzugsweise von dem proximalen Blattende 114 zu einer Mantelfläche des Rotorblattes führt, an der der Eintritt in die Querbolzenausnehmung 140 angeordnet ist.

In der Querbolzenausnehmung 140 ist ein Querbolzen 80 angeordnet. Der Querbolzen 80 weist ferner zwei Querbolzenöffnungen 86, 88 auf, die parallel zu Längsachse des Rotorblattes und radial zur Mittelachse des Querbolzens 80 angeordnet sind. Die erste Querbolzenöffnung 86 ist koaxial zur ersten Längsbolzenausnehmung 130 angeordnet. Die zweite Querbolzenöffnung 88 ist koaxial zur zweiten Längsbolzenausnehmung 132 angeordnet. Ferner weisen die Querbolzenöffnungen 86, 88 jeweils ein Innengewinde 204 auf, welches an dem Ende der Querbolzenöffnung angeordnet ist, welches dem proximalen Blattende 114 abgewandt ist.

Innerhalb der ersten Längsbolzenausnehmung 130 sowie innerhalb der ersten Querbolzenöffnung 86 ist ein erster Längsbolzen 200 angeordnet. Innerhalb der zweiten Längsbolzenausnehmung 132 sowie innerhalb der zweiten Querbolzenöffnung 88 ist ein zweiter Längsbolzen 210 angeordnet. Die Längsbolzen 200, 210 weisen jeweils an ihrem einen Ende ein Gewinde auf, mit dem sie in die Gewinde 204 der Querbolzenöffnungen 86, 88 geschraubt werden können. Somit kann eine Befestigung der Längsbolzen 200, 210 mit dem Querbolzen 80 erfolgen. Zur korrekten Ausrichtung und/oder Positionierung der Längsbolzen 200, 210 in den Längsbolzenausnehmungen 130, 132 und/oder in den Querbolzenöffnungen 86, 88 wird im Stand der Technik in der Regel eine Justierplatte 90 eingesetzt. Die Justierplatte 90 ist vorzugsweise ein aus Stahl bestehendes oder Stahl umfassendes, ringförmiges Element, das an einer Stirnseite des proximalen Endes 114 angeordnet wird. Ein Hilfselement wie diese Justierplatte ist mit der erfindungsgemäßen Lösung, insbesondere durch den Einsatz der erfindungsgemäßen Hülse, nicht mehr erforderlich.

An dem Querbolzen 80 ist mindestens eine Ausnehmung 82 angeordnet. Diese Ausnehmung 82 ist derart am Querbolzen 80 angeordnet, dass der Querbolzen 80 am Blatt 108, insbesondere innerhalb der Querbolzenausnehmung 140, verklebt werden kann. Diese Verklebung 84 dient insbesondere der Fixierung des Querbolzens 80 innerhalb der Querbolzenausnehmung 140. Diese im Stand der Technik bekannte Anordnung hat insbesondere den Nachteil, dass ein in die Längsbolzenausnehmung eingeführter Längsbolzen in der Regel nicht bzw. nicht ausreichend vertikal geführt ist. Der Längsbolzen 200, 210 kann somit um eine horizontale Achse vorzugsweise orthogonal zu seiner Längsausrichtung kippen. Dieses Kippen kann insbesondere am proximalen Blattende 114 zur Kerbwirkungen und/oder unzulässigen Flächenpressungen führen, die das Material an dieser Stelle und/oder in einem diese Stelle umgebenden Bereich schwächen.

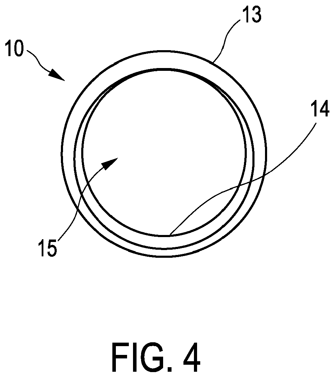

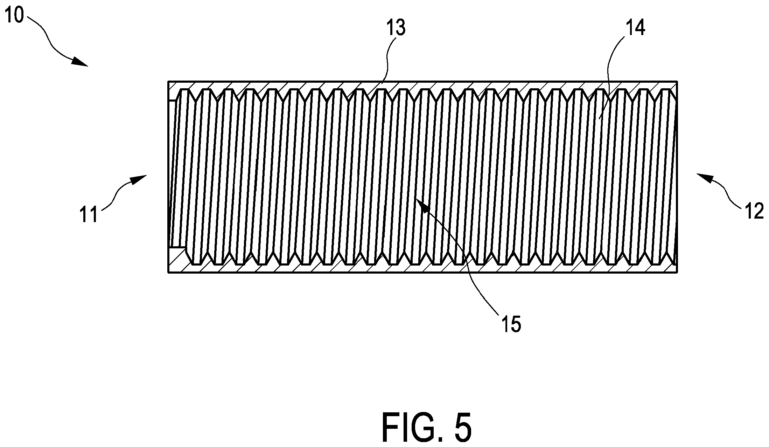

Figur 3 zeigt eine dreidimensionale Ansicht einer nicht erfindungsgemäßen Hülse. Die Hülse 10 erstreckt sich in Längsrichtung von einem ersten Hülsenende 11 zu einem zweiten Hülsenende 12. Die Hülse 10 weist eine rohrförmige Geometrie auf, die einen von einer Wandung 13 umgebenden Hohlraum 15, wie er auch in Figur 4 gezeigt ist, umgibt. Die dem Hohlraum 15 zugewandte Innenumfangsfläche der Wandung 13 weist darüber hinaus ein Gewinde 14 auf. Wie insbesondere in Figur 5 gezeigt ist, erstreckt sich dieses Gewinde vollständig entlang der Längserstreckung der Hülse 10 vom ersten Hülsenende 11 zum zweiten Hülsenende 12.

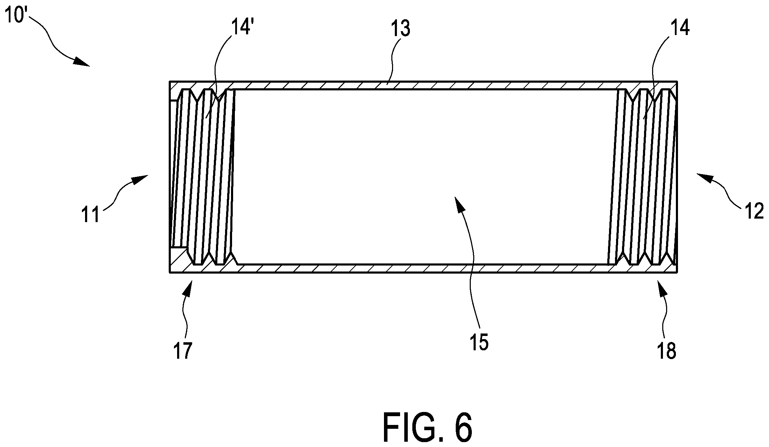

Figur 6 zeigt eine geschnittene Seitenansicht einer weiteren nicht erfindungsgemäßen Hülse. Die Hülse 10` unterscheidet sich von der zuvor beschriebenen Hülse 10 insbesondere dadurch, dass das Gewinde sich nicht im Wesentlichen vollständig vom ersten Hülsenende 11 bis zum zweiten Hülsenende 12 erstreckt. Die Hülse 10` weist ein Gewinde 14' in einem ersten Gewindebereich 17 angrenzend an das erste Hülsenende 11 auf. Darüber hinaus weist die Hülse 10' ein Gewinde 14 auf, das in einem zweiten Gewindebereich 18 angrenzend an das zweite Hülsenende 12 angeordnet ist. Zwischen dem ersten Gewindebereich 17 und dem zweiten Gewindebereich 18 ist in dem Hohlraum kein Gewinde angeordnet, wobei die Gewindebereiche 17, 18 eine Beabstandung aufweisen. Die Gewindebereiche 17, 18 weisen in Längsrichtung jeweils eine Erstreckung auf, die ca. 10% der Gesamterstreckung in Längsrichtung der Hülse 10' entspricht.

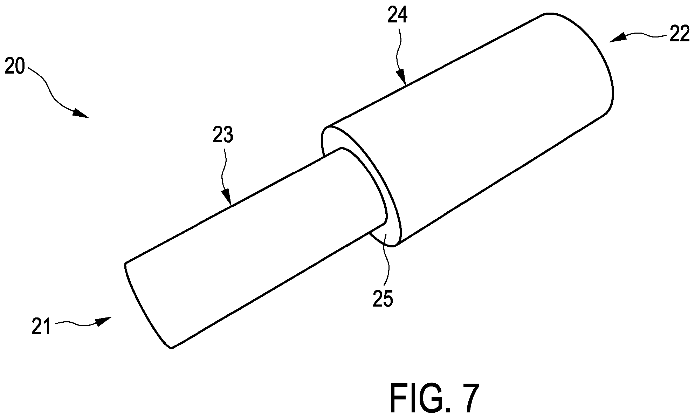

Figur 7 zeigt eine schematische, dreidimensionale Ansicht einer beispielhaften Ausführungsform einer Hülse 20. Die Hülse 20 erstreckt sich von einem ersten Hülsenende 21 bis zu einem zweiten Hülsenende 22. Zwischen dem ersten Hülsenende 21 und dem zweiten Hülsenende 22 weist die Hülse 20 im Gegensatz zu den im Vorherigen beschriebenen Hülsen 10, 10' einen ersten Hülsenabschnitt 23 und einen zweiten Hülsenabschnitt 24 auf. Der erste Hülsenabschnitt 23 weist im Wesentlichen die gleiche Abmessung in Längsrichtung auf wie der zweite Hülsenabschnitt 24. Der erste Hülsenabschnitt 23 unterscheidet sich von dem zweiten Hülsenabschnitt 24 insbesondere dadurch, dass der erste Hülsenabschnitt 23 einen geringeren Außendurchmesser aufweist als der zweite Hülsenabschnitt 24.

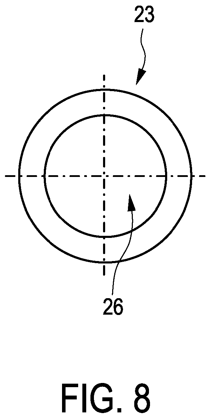

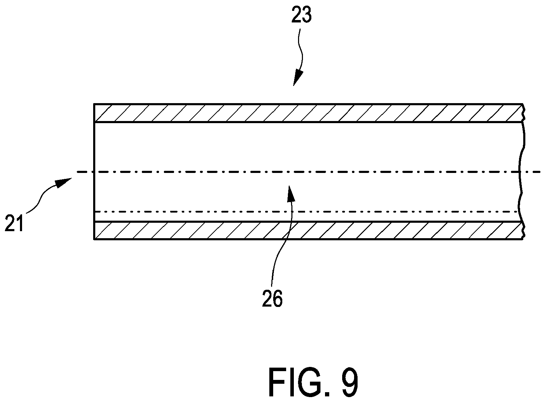

Durch den kreisrunden Querschnitt orthogonal zur Längsachse der Hülse 20 des ersten und zweiten Hülsenabschnitts 23, 24 entsteht am Übergang vom ersten Hülsenabschnitt 23 zum zweiten Hülsenabschnitt 24 ein Absatz 25. Es handelt sich hierbei um einen sprunghaften Absatz, so dass durch den Absatz 25 eine Fläche entsteht, deren Flächenorthogonale im Wesentlichen parallel zur Längserstreckung der Hülse 20 verläuft. In den Figuren 8 und 9 sind Teilansichten des ersten Hülsenabschnitts 23 detaillierter gezeigt. Der Hülsenabschnitt 23 weist einen Hohlraum 26 auf, der sich vom ersten Hülsenende 21 bis zum Ende des ersten Hülsenabschnitts 23 erstreckt. Innerhalb dieses Hohlraums 26 ist in diesem Ausführungsbeispiel kein Gewinde angeordnet. Die in Figur 7 gezeigte Hülse 20 erstreckend von dem ersten Hülsenende 21 zum zweiten Hülsensende 22 weist ebenfalls einen Hohlraum auf, der sich über die gesamte Längserstreckung der Hülse erstreckt.

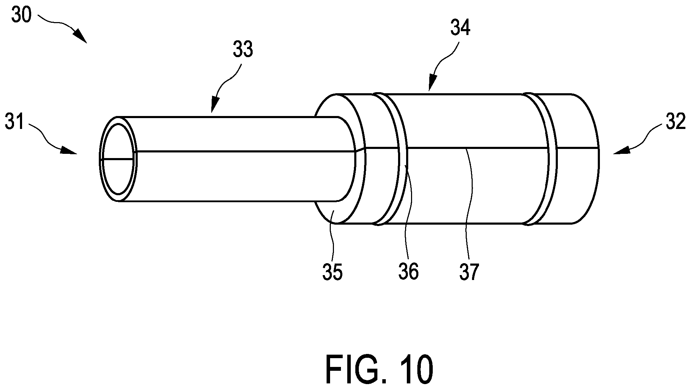

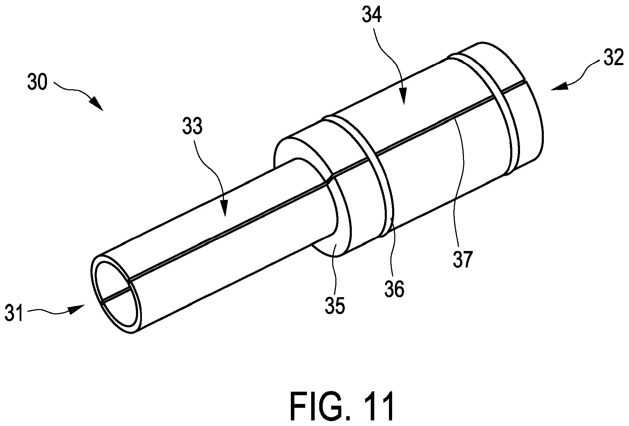

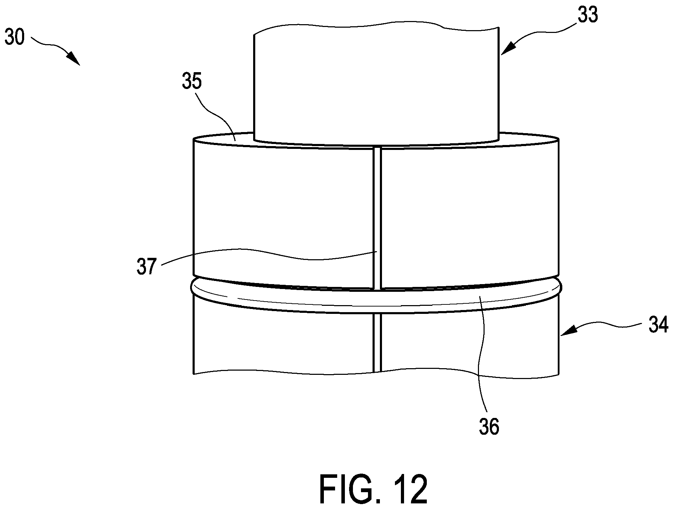

Figur 10 zeigt eine schematische Seitenansicht einer weiteren beispielhaften Ausführungsform einer Hülse 30. Weitere Ansichten der Hülse 30 gemäß Figur 10 sind als dreidimensionale Ansicht in Figur 11 sowie als Detailansicht in Figur 12 gezeigt. Die Hülse 30 weist ebenfalls eine Erstreckung von einem ersten Hülsenende 31 zu einem zweiten Hülsenende 32 auf, wobei die Hülse 30 ebenfalls einen ersten Hülsenabschnitt 33 und einen zweiten Hülsenabschnitt 34 aufweist. Der erste Hülsenabschnitt 33 grenzt an das erste Hülsenende 31 und der zweite Hülsenabschnitt 34 grenzt an das zweite Hülsenende 32. Dadurch entsteht etwa auf halber Strecke der Hülse 30 am Übergang vom ersten zum zweiten Hülsenende 31, 32 ein Absatz 35. Im Gegensatz zu der in den Figuren 7 bis 9 beschriebenen Hülse 20 unterscheidet sich die Hülse 30 dadurch, dass diese zwei Hülsenhälften umfasst. Beide Hülsenhälften erstrecken sich von dem ersten bis zu dem zweiten Hülsenende 31, 32 und bilden so eine Trennfuge 37 aus, die sich vom ersten bis zum zweiten Hülsenende 31, 32 erstreckt.

Die zwei Hülsenhälften weisen somit die Geometrie eines in Längsrichtung geteilten Rohres auf. Die zwei Hülsenhälften weisen darüber hinaus eine spiegelsymmetrische Geometrie auf, so dass die Breite der Trennebene die gleiche Abmessung aufweist wie der Außendurchmesser der Hülse 30. Die zwei Hülsenhälften der Hülse 30 sind derart ausgebildet und aneinander angeordnet, dass die Hülse 30 im Wesentlichen die gleiche Außengeometrie aufweist wie die in Figur 7 gezeigte Hülse 20. Im zweiten Hülsenabschnitt 34 sind zwei radial umlaufende Kerben in der Außenumfangsfläche angeordnet, die jedoch nicht bis in den Hohlraum der Hülse 30 reichen. Diese Kerben sind dafür ausgebildet und angeordnet einen O-Ring 36 aufzunehmen, der die zwei Hülsenhälften miteinander verbindet.

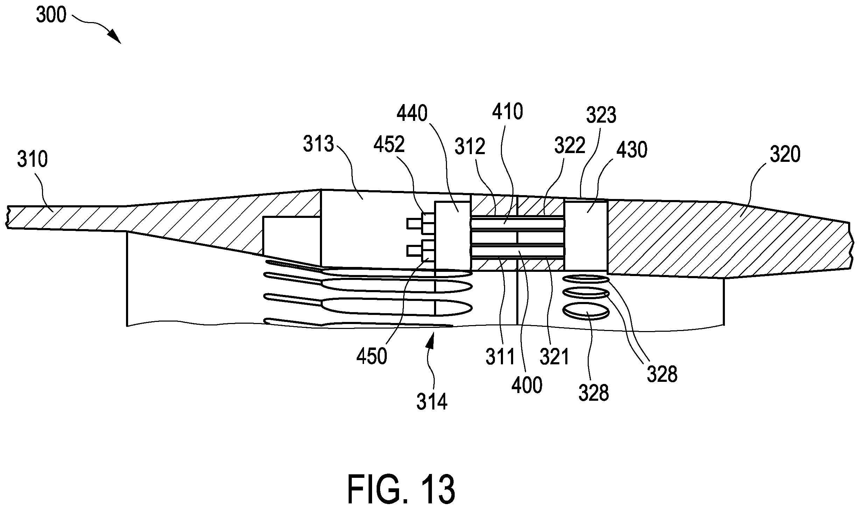

Figur 13 zeigt eine schematische, geschnittene Seitenansicht einer beispielhaften Ausführungsform eines Verbindungsbereiches eines zweigeteilten Rotorblattes. Das Rotorblatt 300 umfasst in diesem Einbauzustand ein Rotorblattinnenteil 310 und ein Rotorblattaußenteil 320. Der Einbauzustand zeigt insbesondere eine Anordnung des Rotorblattinnenteils 310 und des Rotorblattaußenteils 320, die mittels Längsbolzen 400, 410 und Querbolzen 430, 440 miteinander verbunden sind. Das Rotorblattinnenteil 310 weist an dem Ende, das dem Rotorblattaußenteil 320 zugewandt ist, einen Flansch 314 auf. An dem Flansch 314 ist darüber hinaus eine Querbolzenausnehmung 313 angeordnet. Die Querbolzenausnehmung 313 ist radial zu einer Längsachse des Rotorblattes 300 angeordnet. In Längsrichtung des Rotorblattes 300 und somit orthogonal zu der Querbolzenausnehmung 313 sind darüber hinaus eine erste Längsbolzenausnehmung 311 und eine zweite Längsbolzenausnehmung 312 in dem Flansch 314 angeordnet.

Das Rotorblattaußenteil 320 weist eine Querbolzenausnehmung 323 auf, die radial zur Längsachse des Rotorblatts bzw. des Rotorblattaußenteil 320 angeordnet ist. Darüber hinaus weist das Rotorblattaußenteil 320 weitere Querbolzenausnehmungen 328 auf. Orthogonal zur Querbolzenausnehmung 323 und im Wesentlichen parallel zur Längserstreckung des Rotorblatts 300 bzw. des Rotorblattaußenteil 320 sind eine erste Längsbolzenausnehmung 321 und eine zweite Längsbolzenausnehmung 322 angeordnet. Die erste Längsbolzenausnehmung 321 und die zweite Längsbolzenausnehmung 322 sind in radialer Richtung des Rotorblattaußenteils 320 voneinander beabstandet. In den Querbolzenausnehmungen 313, 323 des Rotorblattinnenteils 310 und des Rotorblattaußenteils 320 ist jeweils ein Querbolzen 430, 440 angeordnet. Die Querbolzen 430, 440 weisen Querbolzenöffnungen (hier nicht dargestellt) auf, in denen der Längsbolzen 400, 410 angeordnet werden kann. Die Querbolzenöffnungen sind im montierten Zustand vorzugsweise koaxial zu den Längsbolzenausnehmungen 321, 322 angeordnet. Vorliegend weist der Querbolzen 430 in den zwei Querbolzenöffnungen ein Innengewinde auf (hier nicht gezeigt).

In einer ersten Querbolzenöffnung ist der erste Längsbolzen 400 angeordnet, wobei die Anordnung vorzugsweise derart gestaltet ist, dass die Querbolzenöffnung ein Innengewinde aufweist und der Längsbolzen 400 ein dazu korrespondierendes Außengewinde an dem Ende aufweist, das innerhalb der Querbolzenöffnung angeordnet ist. Durch die Verschraubung des ersten Längsbolzens 400 in der Querbolzenöffnung des Querbolzens 430 erfolgt eine feste Verbindung des Längsbolzens 400 mit dem Querbolzen 430 und somit auch mit dem Rotorblattaußenteil 320. Die Verbindung des zweiten Längsbolzens 410 mit dem Querbolzen 430 erfolgt in analoger Weise.

Die Längsbolzen 400, 410 sind derart angeordnet und ausgebildet, dass diese stirnseitig aus dem Rotorblattaußenteil 320 bzw. aus den Längsbolzenausnehmungen 321, 322 herausragen. Durch das Herausragen der Längsbolzen 400, 410 können diese bei entsprechender Anordnung des Rotorblattinnenteils 310 in den Längsbolzenöffnungen 311, 312 des Rotorblattinnenteils 310 angeordnet werden. Ferner können diese durch Querbolzenöffnungen des Querbolzens 440 hindurchgeführt werden. Vorzugsweise weisen die Längsbolzen 400, 410 auch in einem Bereich angrenzend an das Ende, das innerhalb des Rotorblattinnenteils 310 angeordnet ist, ein Außengewinde auf.

Ferner vorzugsweise ragen die Längsbolzen 400, 410 aus dem Querbolzen 440 auf der Seite heraus, die dem Rotorblattaußenteil 320 abgewandt ist. An dieser Seite können nun Muttern 450, 452 auf das zuvor genannte Gewinde der Längsbolzen 400, 410 aufgeschraubt werden. Durch dieses Aufschrauben kann eine feste Verbindung des Rotorblattinnenteils 310 mit dem Rotorblattaußenteil 320 erreicht werden. Die Zugkräfte in Längsrichtung des Rotorblatts 300 können somit im Wesentlichen durch die Längsbolzen 400, 410 übertragen bzw. aufgenommen werden.

Da die Längsbolzen 400, 410 vorzugsweise zunächst in dem Querbolzen 430 des Rotorblattaußenteils 320 angeordnet werden, können in den Längsbolzenausnehmungen 321, 322 die bereits zuvor ausgeführten Kerbwirkungen und/oder unzulässigen Flächenpressungen auftreten. An dieser Stelle setzt die Erfindung an, und sieht in den Längsbolzenausnehmungen 321, 322 eine Hülse (hier nicht gezeigt) vor. Besonders bevorzugt für diese Verbindung ist eine Hülse wie sie in den Figuren 3 bis 6 dargestellt ist.

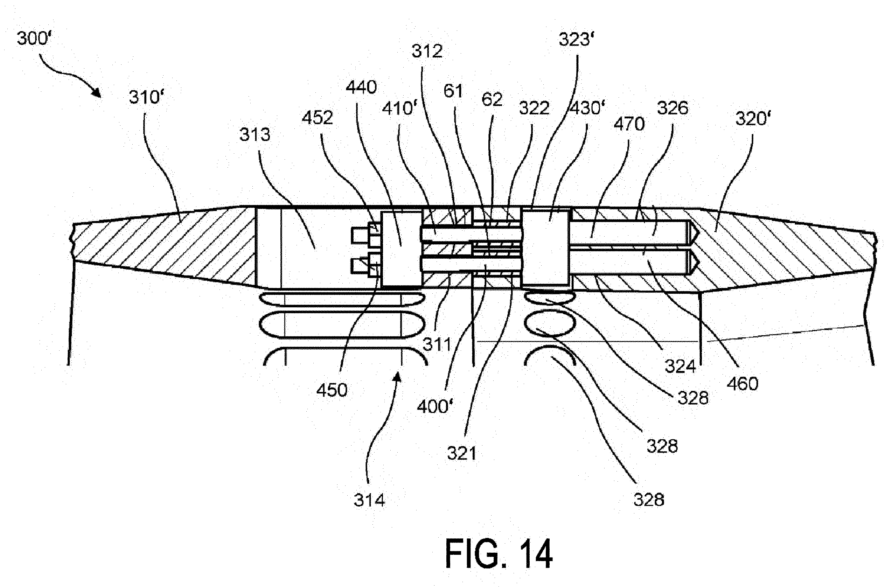

Figur 14 zeigt eine schematische, geschnittene Seitenansicht einer weiteren beispielhaften Ausführungsform eines Verbindungsbereiches eines zweigeteilten Rotorblattes 300`. Diese Ausführungsform des Rotorblattes 300' im Einbauzustand unterscheidet sich insbesondere von dem zuvor beschriebenen Rotorblatt 300 dadurch, dass am Rotorblattaußenteil 320' eine erste Dehnhülsenausnehmung 324 und eine zweite Dehnhülsenausnehmung 326 angeordnet ist. Die Dehnhülsenausnehmungen 324, 326 sind auf der Seite des Querbolzens 430` angeordnet, die dem Rotorblattinnenteil 310' abgewandt ist. Die erste Dehnhülsenausnehmung 324 ist koaxial zur ersten Längsbolzenausnehmung 321 angeordnet. Die zweite Dehnhülsenausnehmung 326 ist koaxial zur zweiten Längsbolzenausnehmung 322 angeordnet. Innerhalb der Dehnhülsenausnehmungen 324, 326 ist ferner eine erste Dehnhülse 460 bzw. zweite Dehnhülse 470 angeordnet. Der Querbolzen 430` ist in einer Querbolzenausnehmung 323' angeordnet. Der Querbolzen 430` weist in dieser Ausführungsvariante ebenfalls zwei Querbolzenöffnungen auf, diese umfassen vorzugsweise kein Innengewinde, so dass ein Längsbolzen 400', 410` durch den Querbolzen 430` hindurchgeführt werden kann und sich diese bis in die Dehnhülsenausnehmungen 324, 326 erstrecken können.

Die Dehnhülsen 460, 470 weisen vorzugsweise eine rohrförmige Geometrie auf, die in ihrem Hohlraum bzw. in der Innenumfangsfläche ein Innengewinde aufweisen. Vorzugsweise weisen die Enden der Längsbolzen, die in die Dehnhülsenausnehmungen 324, 326 ragen bzw. Bereiche, die an diese Enden grenzen, ein zu dem zuvor genannten Innengewinde korrespondierendes Außengewinde auf. Somit können die Längsbolzen 400`, 410` mit den Dehnhülsen 460, 470 verbunden werden. Eine Zugkraft an den Längsbolzen 400`, 410` in Richtung des Rotorblattinnenteils wird somit von den Dehnhülsen 460, 470 über den Querbolzen 430` in die Wandung des Rotorblattaußenteils 320` übertragen. Die Befestigung der Enden der Längsbolzen 400`, 410' am Rotorblattinnenteil 310' erfolgt analog zur zuvor beschriebenen Verbindung am Rotorblattinnenteil 310 des Rotorblatts 300.

In der ersten Längsbolzenausnehmung 321 ist eine Hülse 61 und in der zweiten Längsbolzenausnehmung 322 ist eine Hülse 62 angeordnet. Die Hülsen 61, 62 werden vorzugsweise entweder vor dem Anordnen der Längsbolzen 400`, 410` in den Längsbolzenausnehmungen 321, 322 in diesen angeordnet oder die Hülsen 61, 62werden zunächst an den Längsbolzen 400', 410` angeordnet und anschließend wird die Baugruppe bestehend aus Längsbolzen und Hülse in einer der Längsbolzenausnehmungen 321, 322 angeordnet. Neben den nicht erfindungsgemäßen Hülsen, die in den Figuren 3 bis 6 gezeigt sind, können hier auch erfindungsgemäßen Hülsen gemäß den Figuren 7, 10, 11 und 12 eingesetzt werden, wobei der erste Hülsenbereich 23, 33 vorzugsweise vollständig oder zumindest teilweise in einer der Querbolzenöffnungen angeordnet wird. Der Absatz 25, 35 ist dann vorzugsweise an einer Außenfläche des Querbolzens angeordnet. Alternativ vorzugsweise wird der zweite Hülsenbereich mit dem größeren Außendurchmesser innerhalb einer der Querbolzenöffnungen angeordnet.

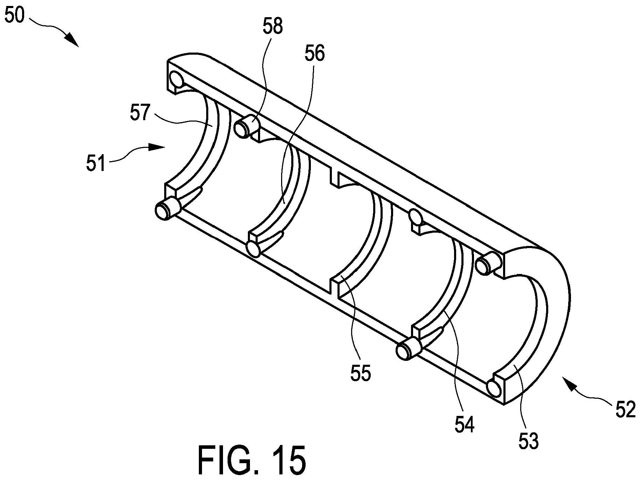

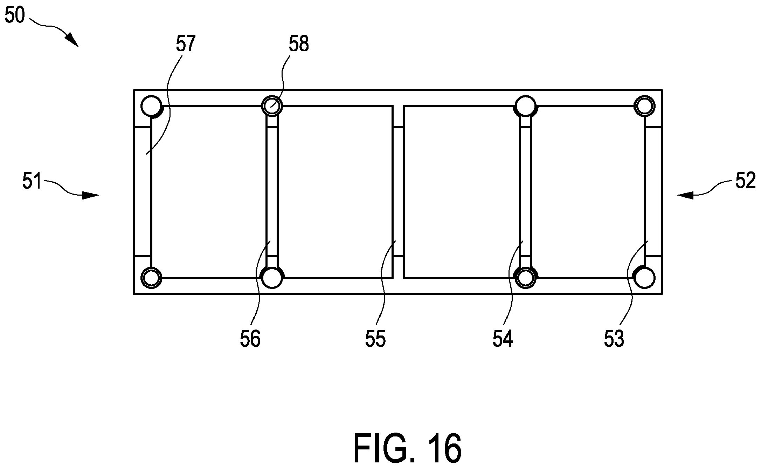

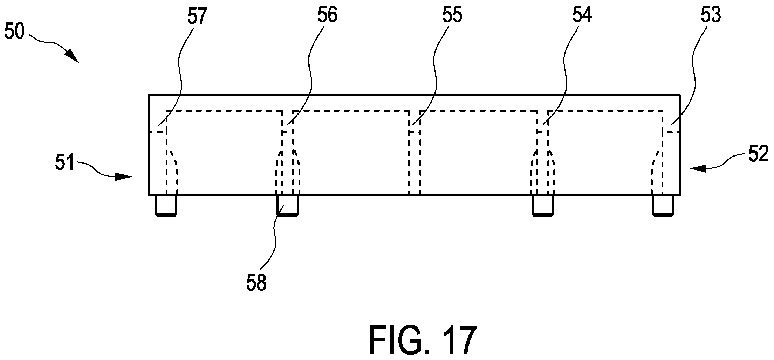

Figur 15 zeigt eine schematische, dreidimensionale Ansicht einer nicht erfindungsgemäßen Hülsenhälfte, wobei die Figuren 16 und 17 weitere Seitenansichten dieser nicht erfindungsgemäßen Hülsenhälfte zeigen. Die Hülsenhälfte 50 erstreckt sich von einem ersten Hülsenhälftenende 51 zu einem zweiten Hülsenhälftenende 52. Am ersten Hülsenhälftenende 51 sowie am zweiten Hülsenhälftenende 52 ist jeweils eine Rippe angeordnet. Am ersten Hülsenhälftenende 51 ist die Rippe 57 und am zweiten Hülsenhälftenende 52 die Rippe 53 angeordnet. Zwischen diesen Rippen 53, 57 sind jeweils mit einem gleichen Abstand zueinander drei weitere Rippen 54, 55, 56 angeordnet. Die Rippen 53-57 erhöhen die Steifigkeit bzw. Festigkeit der Hülse, was insbesondere bei einer zweigeteilten, und somit mit einer geringeren mechanischen Festigkeit versehenen, Hülse vorteilhaft sein kann. Darüber hinaus weist die Hülsenhälfte 50 mehrere Verbindungselemente 58 auf, die hier als Stiftelemente ausgeführt sind, die in eine korrespondierende Öffnung an einer weiteren Hülsenhälfte angeordnet werden können.

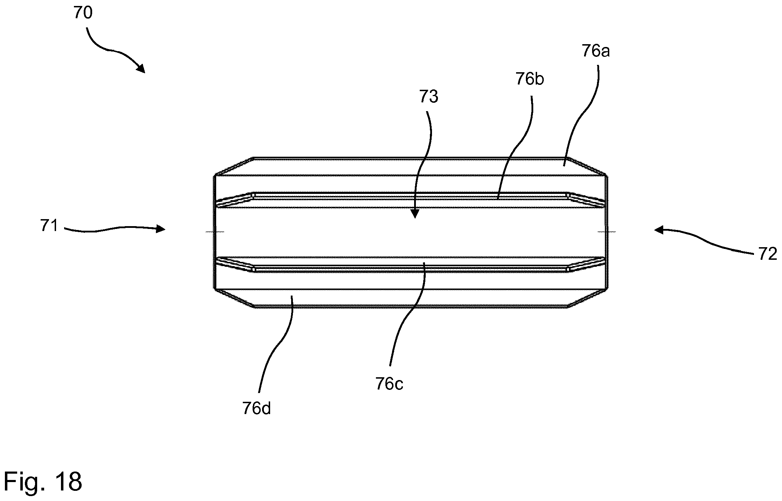

Die in den Figuren 18 bis 20 gezeigte nicht erfindungsgemäße Hülse 70 erstreckt sich in ihrer Haupterstreckungsrichtung von einem ersten Ende 71 zu einem zweiten Ende 72. Die Hülse 70 weist eine radiale Wandung 74 auf, die einen Hohlraum 75 radial umschließt. Die radiale Wandung 74 bildet ferner eine Außenumfangsfläche 73 aus. Die Außenumfangsfläche 73 ist insbesondere als radiale Außenumfangsfläche zu verstehen. Die Hülse 70 weist ferner einen ersten Steg 76a, einen zweiten Steg 76b, einen dritten Steg 76c, einen vierten Steg 76d, einen fünften Steg 76e und einen sechsten Steg 76f auf. Die Stege 76a bis 76f sind an der Außenumfangsfläche 73 der radialen Umwandung 74 angeordnet und erstrecken sich mit ihrer jeweiligen Haupterstreckungsrichtung im Wesentlichen parallel zu einer Durchtrittsachse der Hülse. Die Stege 76a und 76d sowie 76b und 76e sowie 76c und 76f sind jeweils diametral zueinander angeordnet.

Die nicht erfindungsgemäße Hülse 70 zeichnet sich insbesondere dadurch aus, dass diese in einer Längsbolzenausnehmung angeordnet werden kann und dort durch die Stege 76a bis 76f besonders vorteilhaft positionierbar ist. Darüber hinaus kann die Hülse 70 durch die zum ersten Ende 71 und zum zweiten Ende 72 hin sich verjüngenden Stege 76a bis 76f besonders einfach in eine Längsbolzenausnehmung eingeführt werden.

Die erfindungsgemäße Hülse 20, 30, 61, 62 resultiert durch deren Anordnung in einer, zwei oder mehreren Längsbolzenausnehmungen 130, 132, 321, 322 in einer vorteilhaften Ausgestaltung von Rotoren bzw. Rotorblättern. Der Zeitaufwand der Montage des Blattanschlusses, insbesondere in Bezug auf die Anordnung und Befestigung der Quer- und Längsbolzen 200, 210, 400, 400', 410, 410`, 430, 430`, kann durch das Vorsehen einer Hülse 20, 30, 61, 62 um ein Vielfaches reduziert werden und darüber hinaus die Qualität der Rotorblätter verbessern, in dem insbesondere geringere Kerbwirkungen bzw. Flächenpressungen innerhalb der Längsbolzenausnehmungen auftreten. Insbesondere im hochbelasteten Blattanschluss sind derartige Verbesserungen vorteilhaft, die unter anderem in einer längeren Lebenszeit und/oder geringeren Wartungszyklen resultieren können. Ferner können so die Kosten einer Windenergieanlage 100 reduziert werden.

### Bezugszeichen

- 10, 10': Hülse
- 11: erstes Hülsenende
- 12: zweites Hülsenende
- 13: Wandung
- 14, 14': Innengewinde
- 15: Hohlraum
- 17: erster Gewindebereich
- 18: zweiter Gewindebereich
- 20: Hülse
- 21: erstes Hülsenende
- 22: zweites Hülsenende
- 23: erster Hülsenabschnitt
- 24: zweiter Hülsenabschnitt
- 25: Absatz
- 26: Hohlraum
- 30: Hülse
- 31: erstes Hülsenende
- 32: zweites Hülsenende
- 33: erster Hülsenabschnitt
- 34: zweiter Hülsenabschnitt
- 35: Absatz
- 36: O-Ring
- 37: Trennfuge
- 50: Hülse
- 51: erstes Hülsenhälftenende
- 52: zweites Hülsenhälftenende
- 53: Rippe
- 54: Rippe
- 55: Rippe
- 56: Rippe
- 57: Rippe
- 58: Verbindungselement
- 61: erste Hülse
- 62: zweite Hülse
- 70: Hülse
- 71: erstes Hülsenende
- 72: zweites Hülsenende
- 73: Außenumfangsfläche
- 74: radiale Wandung
- 75: Hohlraum
- 76a: erster Steg
- 76b: zweiter Steg
- 76c: dritter Steg
- 76d: vierter Steg
- 76e: fünfter Steg
- 76f: sechster Steg
- 80: Querbolzen
- 82: Ausnehmung am Querbolzen
- 84: Verklebung
- 86: erste Querbolzenöffnung
- 88: zweite Querbolzenöffnung
- 90: Justierplatte
- 100: Windenergieanlage
- 102: Turm
- 104: Gondel
- 106: Rotor
- 108: Rotorblätter
- 110: Spinner
- 114: proximales Blattende
- 130: erste Längsbolzenausnehmung
- 132: zweite Längsbolzenausnehmung
- 140: Querbolzenausnehmung
- 200: erster Längsbolzen
- 204: Außengewinde
- 210: zweiter Längsbolzen
- 300, 300': Rotorblatt
- 310, 310': Rotorblattinnenteil
- 311: erste Längsbolzenausnehmung
- 312: zweite Längsbolzenausnehmung
- 313: Querbolzenausnehmung
- 314: Flansch
- 320, 320': Rotorblattaußenteil
- 321: erste Längsbolzenausnehmung
- 322: zweite Längsbolzenausnehmung
- 323, 323': Querbolzenausnehmung
- 324: erste Dehnhülsenausnehmung
- 326: zweite Dehnhülsenausnehmung
- 328: Querbolzenausnehmungen
- 400, 400': erster Längsbolzen
- 410, 410': zweiter Längsbolzen
- 430, 430': Querbolzen
- 440: zweiter Querbolzen
- 450: erste Mutter
- 452: zweite Mutter
- 460: erste Dehnhülse
- 470: zweite Dehnhülse

## Patentansprüche

1. Rotor (106) für eine Windenergieanlage (100), mit mindestens einem Rotorblatt (108), das mit einer Stirnseite mit einer Rotornabe verbunden ist, wobei das Rotorblatt umfasst
- eine sich im Wesentlichen radial zur Längsachse des Rotorblatts (108) erstreckende Querbolzenausnehmung (323, 323`), in der ein Querbolzen (430, 430') angeordnet ist,
- wobei der Querbolzen eine Querbolzenöffnung aufweist,
- eine sich im Wesentlichen parallel zur Längsachse des Rotorblatts (108) erstreckende Längsbolzenausnehmung (321, 322),
- wobei die Längsbolzenausnehmung (321, 322) und die Querbolzenausnehmung (323, 323') und/oder Querbolzenöffnung einen gemeinsamen Durchgang aufweisen, und ein Längsbolzen (400, 400', 410, 410') innerhalb der Längsbolzenausnehmung und innerhalb der Querbolzenöffnung angeordnet ist,
- in der Längsbolzenausnehmung eine Hülse (20, 30, 61, 62) angeordnet ist,
- wobei sich der Längsbolzen (400, 400', 410, 410') durch einen Hohlraum (26) der Hülse erstreckt,
- **dadurch gekennzeichnet, dass** sich die Hülse (20, 30, 61, 62) von einem ersten Hülsenende (21, 31) bis zu einem zweiten Hülsenende (12, 22, 32) erstreckt, umfassend einen ersten Hülsenabschnitt (23, 33), angrenzend an das erste Hülsenende, mit einem ersten Außendurchmesser und einen zweiten Hülsenabschnitt (24, 34), angrenzend an das zweite Hülsenende, mit einem zweiten Außendurchmesser, wobei sich der erste Außendurchmesser von dem zweiten Außendurchmesser durch seine Abmessung unterscheidet, wobei der erste und/oder zweite Hülsenabschnitt (23, 24, 33, 34) innerhalb der Querbolzenöffnung angeordnet ist.

2. Rotor (106) gemäß dem vorhergehenden Anspruch, wobei
das mindestens eine Rotorblatt (108) mehrere Längsbolzenausnehmungen (321, 322) und/oder mehrere Querbolzenausnehmungen (232, 323`, 328) und/oder mehrere Längsbolzen (400, 400', 410, 410`) und/oder mehrere Querbolzen (430, 430') mit jeweils mindestens einer Querbolzenöffnung und/oder mehrere Hülsen (20, 30, 61, 62) umfasst.

3. Rotor (106) gemäß mindestens einem der vorhergehenden Ansprüche, wobei
die Hülse (20, 30, 61, 62) aus einem Kunststoff besteht oder einen Kunststoff umfasst, und/oder die Hülse in Längsrichtung mindestens zweigeteilt ist

4. Rotor (106) gemäß mindestens einem der vorhergehenden Ansprüche, wobei
- in dem Hohlraum (26) der Hülse (30, 61, 62) mindestens ein Innengewinde angeordnet ist, wobei das Innengewinde vorzugsweise in einem Abschnitt angeordnet ist, der an das erste Hülsenende (31) und/oder an das zweite Hülsenende (32) angrenzt.

5. Rotor (106) gemäß mindestens einem der vorhergehenden Ansprüche, wobei
die Hülse an die Stirnseite des Rotorblatts (108) und/oder an einem stirnseitenzugewandten Ende der Längsbolzenausnehmung (321, 322) oder einem stirnseitenabgewandten Ende der Längsbolzenausnehmung angrenzt.

6. Rotor (106) gemäß mindestens einem der vorhergehenden Ansprüche, wobei
die Hülse (20, 30, 61, 62) eine Beabstandung von der Stirnseite des Rotorblatts (108) und/oder einem stirnseitenzugewandten Ende der Längsbolzenausnehmung (321, 322) oder einem stirnseitenabgewandten Ende der Längsbolzenausnehmung aufweist und diese Beabstandung
- 0 bis 25% einer Erstreckung der Längsbolzenausnehmung (321, 322) und/oder einer Gesamterstreckung von Längsbolzenausnehmung und Querbolzenöffnung ist.

7. Rotor (106) gemäß mindestens einem der vorhergehenden Ansprüche, umfassend eine auf der stirnseitenabgewandten Seite des Querbolzens (430, 430') angeordnete, sich im Wesentlichen parallel zur Längsachse des Rotorblatts (108) und koaxial zur Längsbolzenausnehmung (321, 322) erstreckende Dehnhülsenausnehmung (324, 326), in der eine Dehnhülse (460, 470) angeordnet ist, und/oder
wobei der innerhalb der Querbolzenöffnung angeordnete erste und/oder zweite Hülsenabschnitt (23, 24, 33, 34)vorzugsweise einen größeren oder kleineren Außendurchmesser aufweist als andere Hülsenabschnitte.

8. Rotorblatt (300, 300`) für eine Windenergieanlage (100), das sich von einer Blattwurzel zu einer Blattspitze in Längsrichtung erstreckt, wobei die Blattwurzel zur Befestigung des Rotorblatts an einer Rotornabe ausgebildet ist, mit einem die Blattwurzel umfassendes Rotorblattinnenteil (310, 310`) und einem die Blattspitze umfassendes Rotorblattaußenteil (320, 320`), wobei das Rotorblattinnenteil und das Rotorblattaußenteil in einem Verbindungsbereich miteinander verbunden sind, wobei das Rotorblattinnenteil und/oder das Rotorblattaußenteil in dem Verbindungsbereich umfasst
- eine im Wesentlichen radial zur Längsachse des Rotorblatts (300, 300') erstreckende Querbolzenausnehmung (323, 323`) in der ein Querbolzen (430, 430') angeordnet ist,
- wobei der Querbolzen (430, 430') radial zu seiner Längsachse eine Querbolzenöffnung aufweist,
- eine im Wesentlichen parallel zur Längsachse des Rotorblatts (300, 300') erstreckende Längsbolzenausnehmung (321, 322), die sich von einem ersten Ende an der Stirnseite des Rotorblatts bis zu einem zweiten Ende an der Querbolzenausnehmung (323, 323`) erstreckt,
- wobei die Längsbolzenausnehmung (321, 322) und die Querbolzenausnehmung (323, 323`) und/oder Querbolzenöffnung einen gemeinsamen Durchgang aufweisen,
- in der Längsbolzenausnehmung (321, 322) eine Hülse (20, 30, 61, 62) angeordnet ist,
- wobei sich ein Längsbolzen (400, 400', 410, 410`) durch einen Hohlraum der Hülse erstreckt, und
- der Längsbolzen mit einem Abschnitt innerhalb der Querbolzenöffnung angeordnet ist,
- **dadurch gekennzeichnet, dass** sich die Hülse (20, 30, 61, 62) von einem ersten Hülsenende (21, 31) bis zu einem zweiten Hülsenende (22, 32) erstreckt, umfassend einen ersten Hülsenabschnitt (23, 33), angrenzend an das erste Hülsenende, mit einem ersten Außendurchmesser und einen zweiten Hülsenabschnitt (24, 34), angrenzend an das zweite Hülsenende, mit einem zweiten Außendurchmesser, wobei sich der erste Außendurchmesser von dem zweiten Außendurchmesser durch seine Abmessung unterscheidet, wobei der erste und/oder zweite Hülsenabschnitt (23, 24, 33, 34) innerhalb der Querbolzenöffnung angeordnet ist.

9. Rotor (106) gemäß den Ansprüchen 1-7 umfassend ein Rotorblatt (300, 300`) gemäß Anspruch 8.

10. Windenergieanlage (100) umfassend mindestens einen Rotor (106) gemäß den Ansprüchen 1-7 und/oder Anspruch 9 und/oder mindestens ein Rotorblatt (300, 300`) gemäß Anspruch 8.

11. Verfahren zur Montage eines Rotors (106) gemäß den Ansprüchen 1-7 und/oder Anspruch 9 und/oder eines Rotorblatts (300, 300`) gemäß Anspruch 8 umfassend die Schritte
- Anordnen des Querbolzens (430, 430') innerhalb der Querbolzenausnehmung (323, 323`), und/oder
- Anordnen der Hülse (20, 30, 61, 62) und/oder des Längsbolzens (400, 400', 410, 410`) innerhalb der Längsbolzenausnehmung (321, 322),
- wobei der Längsbolzen innerhalb des Hohlraums (26) der Hülse angeordnet ist,
- wobei ein Abschnitt des Längsbolzens innerhalb der Querbolzenausnehmung (323, 323`) angeordnet wird,
- **dadurch gekennzeichnet, dass** sich die Hülse (20, 30, 61, 62) von einem ersten Hülsenende (21, 31) bis zu einem zweiten Hülsenende (22, 32) erstreckt, umfassend einen ersten Hülsenabschnitt (23, 33), angrenzend an das erste Hülsenende, mit einem ersten Außendurchmesser und einen zweiten Hülsenabschnitt (24, 34), angrenzend an das zweite Hülsenende, mit einem zweiten Außendurchmesser, wobei sich der erste Außendurchmesser von dem zweiten Außendurchmesser durch seine Abmessung unterscheidet, wobei der erste und/oder zweite Hülsenabschnitt (23, 24, 33, 34) innerhalb der Querbolzenöffnung angeordnet ist.

12. Verfahren gemäß dem vorhergehenden Anspruch, umfassend
- Positionieren und/oder Befestigen des Längsbolzens innerhalb der Querbolzenöffnung mittels der Hülse, und/oder
- Befestigen des Längsbolzens (400, 400`, 410, 410`) innerhalb der Querbolzenöffnung, wobei die Befestigung vorzugsweise durch eine Schraubverbindung erfolgt, so dass vorzugsweise die Querbolzenöffnung ein Innengewinde und der Längsbolzen vorzugsweise ein Außengewinde aufweist, und/oder
- Anordnen einer Dehnhülse (460, 470) innerhalb einer Dehnhülsenausnehmung (324, 326), wobei die Dehnhülsenausnehmung auf einer stirnseitenabgewandten Seite der Querbolzenöffnung angeordnet ist, und/oder
- Hindurchführen eines Längsbolzens durch die Querbolzenöffnung, und/oder Verbinden des Längsbolzens mit der Dehnhülse.

## Claims

1. A rotor (106) for a wind power installation (100), having at least one rotor blade (108) which is connected by means of a face side to a rotor hub, wherein the rotor blade comprises
- a transverse bolt recess (323, 323') which extends substantially radially with respect to the longitudinal axis of the rotor blade (108) and in which a transverse bolt (430, 430') is arranged,
- wherein the transverse bolt has a transverse bolt opening,
- a longitudinal bolt recess (321, 322) which extends substantially parallel to the longitudinal axis of the rotor blade (108),
- wherein the longitudinal bolt recess (321, 322) and the transverse bolt recess (323, 323') and/or transverse bolt opening have a common passage, and a longitudinal bolt (400, 400', 410, 410') is arranged within the longitudinal bolt recess and within the transverse bolt opening,
- a sleeve (20, 30, 61, 62) is arranged in the longitudinal bolt recess,
- wherein the longitudinal bolt (400, 400', 410, 410') extends through a cavity (26) of the sleeve,
- **characterized in that** the sleeve (20, 30, 61, 62) extends from a first sleeve end (21, 31) to a second sleeve end (12, 22, 32), comprising a first sleeve section (23, 33), adjoining the first sleeve end, with a first outer diameter and comprising a second sleeve section (24, 34), adjoining the second sleeve end, with a second outer diameter, wherein the first outer diameter differs from the second outer diameter in terms of its dimensions, wherein the first and/or second sleeve section (23, 24, 33, 34) is arranged within the transverse bolt opening.

2. The rotor (106) as claimed in the preceding claim, wherein the at least one rotor blade (108) comprises multiple longitudinal bolt recesses (321, 322) and/or multiple transverse bolt recesses (232, 323', 328) and/or multiple longitudinal bolts (400, 400', 410, 410') and/or multiple transverse bolts (430, 430') with in each case at least one transverse bolt opening and/or multiple sleeves (20, 30, 61, 62).

3. The rotor (106) as claimed in at least one of the preceding claims, wherein the sleeve (20, 30, 61, 62) is composed of a plastic or comprises a plastic, and/or the sleeve is in at least two parts in a longitudinal direction.

4. The rotor (106) as claimed in at least one of the preceding claims, wherein
- at least one internal thread is arranged in the cavity (26) of the sleeve (30, 61, 62), wherein the internal thread is preferably arranged in a section which adjoins the first sleeve end (31) and/or the second sleeve end (32).

5. The rotor (106) as claimed in at least one of the preceding claims, wherein the sleeve adjoins the face side of the rotor blade (108) and/or a face-side-facing end of the longitudinal bolt recess (321, 322) or a face-side-averted end of the longitudinal bolt recess.

6. The rotor (106) as claimed in at least one of the preceding claims, wherein the sleeve (20, 30, 61, 62) has a spacing from the face side of the rotor blade (108) and/or from a face-side-facing end of the longitudinal bolt recess (321, 322) or from a face-side-averted end of the longitudinal bolt recess, and said spacing
- is 0 to 25% of an extent of the longitudinal bolt recess (321, 322) and/or of an overall extent of longitudinal bolt recess and transverse bolt opening.

7. The rotor (106) as claimed in at least one of the preceding claims, comprising an expansion sleeve recess (324, 326) which is arranged on the face-side-averted side of the transverse bolt (430, 430') and which extends substantially parallel to the longitudinal axis of the rotor blade (108) and coaxially with respect to the longitudinal bolt recess (321, 322) and in which an expansion sleeve (460, 470) is arranged, and/or
wherein the first and/or second sleeve section (23, 24, 33, 34) arranged within the transverse bolt opening preferably has an outer diameter greater than or smaller than that of other sleeve sections.

8. A rotor blade (300, 300') for a wind power installation (100), which rotor blade extends from a blade root to a blade tip in a longitudinal direction, wherein the blade root is designed for the fastening of the rotor blade to a rotor hub, having a rotor blade inner part (310, 310') which comprises the blade root and having a rotor blade outer part (320, 320') which comprises the blade tip, wherein the rotor blade inner part and the rotor blade outer part are connected to one another in a connecting region, wherein the rotor blade inner part and/or the rotor blade outer part comprises, in the connecting region,
- a transverse bolt recess (323, 323') which extends substantially radially with respect to the longitudinal axis of the rotor blade (300, 300') and in which a transverse bolt (430, 430') is arranged,
- wherein the transverse bolt (430, 430') has a transverse bolt opening radially with respect to its longitudinal axis,
- a longitudinal bolt recess (321, 322) which extends substantially parallel to the longitudinal axis of the rotor blade (300, 300') and which extends from a first end at the face side of the rotor blade to a second end at the transverse bolt recess (323, 323'),
- wherein the longitudinal bolt recess (321, 322) and the transverse bolt recess (323, 323') and/or transverse bolt opening have a common passage,
- a sleeve (20, 30, 61, 62) is arranged in the longitudinal bolt recess (321, 322),
- wherein a longitudinal bolt (400, 400', 410, 410') extends through a cavity of the sleeve, and
- the longitudinal bolt is arranged with a section within the transverse bolt opening
- **characterized in that** the sleeve (20, 30, 61, 62) extends from a first sleeve end (21, 31) to a second sleeve end (22, 32), comprising a first sleeve section (23, 33), adjoining the first sleeve end, with a first outer diameter and comprising a second sleeve section (24, 34), adjoining the second sleeve end, with a second outer diameter, wherein the first outer diameter differs from the second outer diameter in terms of its dimensions, wherein the first and/or second sleeve section (23, 24, 33, 34) is arranged within the transverse bolt opening.

9. The rotor (106) as claimed in claims 1-7, comprising a rotor blade (300, 300') as claimed in claim 8.

10. A wind power installation (100) comprising at least one rotor (106) as claimed in claims 1-7 and/or claim 9 and/or at least one rotor blade (300, 300') as claimed in claim 8.

11. A method for the assembly of a rotor (106) as claimed in claims 1-7 and/or claim 9 and/or of a rotor blade (300, 300') as claimed in claim 8, comprising the steps:
- arranging the transverse bolt (430, 430') within the transverse bolt recess (323, 323'), and/or
- arranging the sleeve (20, 30, 61, 62) and/or the longitudinal bolt (400, 400', 410, 410') within the longitudinal bolt recess (321, 322),
- wherein the longitudinal bolt is arranged within the cavity (26) of the sleeve,
- wherein a section of the longitudinal bolt is arranged within the transverse bolt recess (323, 323')
- **characterized in that** the sleeve (20, 30, 61, 62) extends from a first sleeve end (21, 31) to a second sleeve end (22, 32), comprising a first sleeve section (23, 33), adjoining the first sleeve end, with a first outer diameter and comprising a second sleeve section (24, 34), adjoining the second sleeve end, with a second outer diameter, wherein the first outer diameter differs from the second outer diameter in terms of its dimensions, wherein the first and/or second sleeve section (23, 24, 33, 34) is arranged within the transverse bolt opening.

12. The method as claimed in the preceding claim, comprising
- positioning and/or fastening the longitudinal bolt within the transverse bolt opening by means of the sleeve, and/or
- fastening the longitudinal bolt (400, 400', 410, 410') within the transverse bolt opening, wherein the fastening is realized preferably by means of a screw connection, such that the transverse bolt opening preferably has an internal thread and the longitudinal bolt preferably has an external thread, and/or
- arranging an expansion sleeve (460, 470) within an expansion sleeve recess (324, 326), wherein the expansion sleeve recess is arranged on a face-side-averted side of the transverse bolt opening, and/or
- leading a longitudinal bolt through the transverse bolt opening, and/or connecting the longitudinal bolt to the expansion sleeve.

## Revendications

1. Rotor (106) pour une éolienne (100), avec au moins une pale de rotor (108), qui est reliée par un côté frontal à un moyeu de rotor, dans lequel la pale de rotor comprend
- un évidement de broche transversale (323, 323') s'étendant de manière sensiblement radiale par rapport à l'axe longitudinal de la pale de rotor (108), dans laquelle une broche transversale (430, 430') est disposée,
- dans lequel la broche transversale présente une ouverture de broche transversale,
- un évidement de broche longitudinale (321, 322) s'étendant de manière sensiblement parallèle par rapport à l'axe longitudinal de la pale de rotor (108),
- dans lequel l'évidement de broche longitudinale (321, 322) et l'évidement de broche transversale (323, 323') et/ou l'ouverture de broche transversale présentent un passage commun, et une broche longitudinale (400, 400', 410, 410') est disposée à l'intérieur de l'évidement de broche longitudinale et à l'intérieur de l'ouverture de broche transversale,
- un manchon (20, 30, 61, 62) est disposé dans l'évidement de broche longitudinale,
- dans lequel la broche longitudinale (400, 400', 410, 410') s'étend à travers une cavité (26) du manchon,
- **caractérisé en ce que** le manchon (20, 30, 61, 62) s'étend depuis une première extrémité de manchon (21, 31) jusqu'à une deuxième extrémité de manchon (12, 22, 32), comprenant une première section de manchon (23, 33), de manière adjacente à la première extrémité de manchon, avec un premier diamètre extérieur et une deuxième section de manchon (24, 34), de manière adjacente à la deuxième extrémité de manchon, avec un deuxième diamètre extérieur, dans lequel le premier diamètre extérieur est différent du deuxième diamètre extérieur par sa dimension, dans lequel la première et/ou la deuxième section de manchon (23, 24, 33, 34) sont disposées à l'intérieur de l'ouverture de broche transversale.

2. Rotor (106) selon la revendication précédente, dans lequel
l'au moins une pale de rotor (108) comprend plusieurs évidements de broche longitudinale (321, 322) et/ou plusieurs évidements de broche transversale (232, 323', 328) et/ou plusieurs broches longitudinales (400, 400', 410, 410') et/ou plusieurs broches transversales (430, 430'), avec respectivement au moins une ouverture de broche transversale et/ou plusieurs manchons (20, 30, 61, 62).

3. Rotor (106) selon au moins l'une quelconque des revendications précédentes, dans lequel le manchon (20, 30, 61, 62) est constitué d'une matière plastique ou comprend une matière plastique, et/ou le manchon est divisé au moins en deux parties dans la direction longitudinale.

4. Rotor (106) selon au moins l'une quelconque des revendications précédentes, dans lequel
- au moins un filetage intérieur est disposé dans la cavité (26) du manchon (30, 61, 62), dans lequel le filetage intérieur est disposé de préférence dans une section, qui est adjacente à la première extrémité de manchon (31) et/ou à la deuxième extrémité de manchon (32) .

5. Rotor (106) selon au moins l'une quelconque des revendications précédentes, dans lequel
le manchon est adjacent au côté frontal de la pale de rotor (108) et/ou à une extrémité, tournée vers le côté frontal, de l'évidement de broche longitudinale (321, 322) ou à une extrémité, opposée au côté frontal, de l'évidement de broche longitudinale.

6. Rotor (106) selon au moins l'une quelconque des revendications précédentes, dans lequel
le manchon (20, 30, 61, 62) présente un espacement par rapport au côté frontal de la pale de rotor (108) et/ou à une extrémité, tournée vers le côté frontal, de l'évidement de broche longitudinale (321, 322) ou à une extrémité, opposée au côté frontal, de l'évidement de broche longitudinale et cet espacement
- constitue 0 à 25 % d'une extension de l'évidement de broche longitudinale (321, 322) et/ou d'une extension totale de l'évidement de broche longitudinale et de l'ouverture de broche transversale.

7. Rotor (106) selon au moins l'une quelconque des revendications précédentes, comprenant un évidement de manchon extensible (324, 326) disposé sur le côté, opposé au côté frontal, de la broche transversale (430, 430'), s'étendant de manière sensiblement parallèle à l'axe longitudinal de la pale de rotor (108) et de manière coaxiale par rapport à l'évidement de broche longitudinale (321, 322), dans lequel un manchon extensible (460, 470) est disposé, et/ou
dans lequel la première et/ou la deuxième section de manchon (23, 24, 33, 34) disposée à l'intérieur de l'ouverture de broche transversale présente(nt) de préférence un diamètre extérieur plus grand ou plus petit que d'autres sections de manchon.

8. Pale de rotor (300, 300') pour une éolienne (100), qui s'étend depuis une racine de pale vers une pointe de pale dans la direction longitudinale, dans laquelle la racine de pale est réalisée pour la fixation de la pale de rotor sur un moyeu de rotor, avec une partie intérieure de pale de rotor (310, 310') comprenant la racine de pale et une partie extérieure de pale de rotor (320, 320') comprenant la pointe de pale, dans laquelle la partie intérieure de pale de rotor et la partie extérieure de pale de rotor sont reliées l'une à l'autre dans une zone de liaison, dans laquelle la partie intérieure de pale de rotor et/ou la partie extérieure de pale de rotor compren/d/nent, dans la zone de liaison,
- un évidement de broche transversale (323, 323') s'étendant de manière sensiblement radiale par rapport à l'axe longitudinal de la pale de rotor (300, 300'), dans lequel une broche transversale (430, 430') est disposée,
- dans laquelle la broche transversale (430, 430') présente, de manière radiale par rapport à son axe longitudinal, une ouverture de broche transversale,
- un évidement de broche longitudinale (321, 322) s'étendant de manière sensiblement parallèle par rapport à l'axe longitudinal de la pale de rotor (300, 300'), qui s'étend depuis une première extrémité sur le côté frontal de la pale de rotor jusqu'à une deuxième extrémité sur l'évidement de broche transversale (323, 323'),
- dans laquelle l'évidement de broche longitudinale (321, 322) et l'évidement de broche transversale (323, 323') et/ou l'ouverture de broche transversale présente(nt) un passage commun,
- un manchon (20, 30, 61, 62) est disposé dans l'évidement de broche longitudinale (321, 322),
- dans laquelle une broche longitudinale (400, 400', 410, 410') s'étend à travers une cavité du manchon, et
- la broche longitudinale est disposée par une section à l'intérieur de l'ouverture de broche transversale,
- **caractérisée en ce que** le manchon (20, 30, 61, 62) s'étend depuis une première extrémité de manchon (21, 31) jusqu'à une deuxième extrémité de manchon (22, 32), comprenant une première section de manchon (23, 33), de manière adjacente à la première extrémité de manchon, avec un premier diamètre extérieur et une deuxième section de manchon (24, 34), de manière adjacente à la deuxième extrémité de manchon, avec un deuxième diamètre extérieur, dans lequel le premier diamètre extérieur est différent du deuxième diamètre extérieur par sa dimension, dans laquelle la première et/ou la deuxième section de manchon (23, 24, 33, 34) est/sont disposée(s) à l'intérieur de l'ouverture de broche transversale.

9. Rotor (106) selon les revendications 1 - 7, comprenant une pale de rotor (300, 300') selon la revendication 8.

10. Éolienne (100) comprenant au moins un rotor (106) selon les revendications 1 - 7 et/ou la revendication 9 et/ou au moins une pale de rotor (300, 300') selon la revendication 8.

11. Procédé de montage d'un rotor (106) selon les revendications 1 - 7 et/ou selon la revendication 9 et/ou d'une pale de rotor (300, 300') selon la revendication 8, comprenant les étapes
- de disposition de la broche transversale (430, 430') à l'intérieur de l'évidement de broche transversale (323, 323'), et/ou
- de disposition du manchon (20, 30, 61, 62) et/ou de la broche longitudinale (400, 400', 410, 410') à l'intérieur de l'évidement de broche longitudinale (321, 322),
- dans lequel la broche longitudinale est disposée à l'intérieur de la cavité (26) du manchon,
- dans lequel une section de la broche longitudinale est disposée à l'intérieur de l'évidement de broche transversale (323, 323'),
- **caractérisé en ce que** le manchon (20, 30, 61, 62) s'étend depuis une première extrémité de manchon (21, 31) jusqu'à une deuxième extrémité de manchon (22, 32), comprenant une première section de manchon (23, 33), de manière adjacente à la première extrémité de manchon, avec un premier diamètre extérieur et une deuxième section de manchon (24, 34), de manière adjacente à la deuxième extrémité de manchon, avec un deuxième diamètre extérieur, dans lequel le premier diamètre extérieur est différent du deuxième diamètre extérieur par sa dimension, dans lequel la première et/ou la deuxième section de manchon (23, 24, 33, 34) est/sont disposée(s) à l'intérieur de l'ouverture de broche transversale.

12. Procédé selon la revendication précédente, comprenant
- le positionnement et/ou la fixation de la broche longitudinale à l'intérieur de l'ouverture de broche transversale au moyen du manchon, et/ou
- la fixation de la broche longitudinale (400, 400', 410, 410') à l'intérieur de l'ouverture de broche transversale, dans lequel la fixation est effectuée de préférence par une liaison par vissage de sorte que, de préférence, l'ouverture de broche transversale présente un filetage intérieur et la broche longitudinale présente de préférence un filetage extérieur, et/ou
- la disposition d'un manchon extensible (460, 470) à l'intérieur d'un évidement de manchon extensible (324, 326), dans lequel l'évidement de manchon extensible est disposé sur un côté, opposé au côté frontal, de l'ouverture de broche transversale,
et/ou
- le guidage d'une broche longitudinale à travers l'ouverture de broche transversale, et/ou la liaison de la broche longitudinale au manchon extensible.
